# EUROPÄISCHE PATENTSCHRIFT

(11) **EP 2 143 745 B1**
(45) Veröffentlichungstag und Bekanntmachung des Hinweises auf die Patenterteilung: **21.04.2010**
(21) Anmeldenummer: 08159981.3
(22) Anmeldetag: 09.07.2008
(51) Int. Cl.: C08G 18/10, C08G 18/67, C08G 18/75, C08G 18/78, C09J 175/04, C09J 175/16, C09J 163/00, C08G 18/81, C08G 18/68

(54) **Hybrid-funktionelle Polymere**
Hybrid-functional polymers
Polymères avec fonctions hybride

(43) Veröffentlichungstag der Anmeldung: 13.01.2010
(73) Patentinhaber: Sika Technology AG, 6340 Baar (CH)
(72) Erfinder: Kramer, Andreas, 8006, Zürich (CH)
(74) Vertreter: Sika Patent Attorneys

(56) Entgegenhaltungen:
- EP-A- 1 916 272
- WO-A-01/23466
- DE-A1- 1 719 215

## Beschreibung

### Technisches Gebiet

Gegenstand der Erfindung sind Hybrid-funktionelle Polymere, Verfahren zu ihrer Herstellung und ihre Verwendung. Die Erfindung betrifft auch Zusammensetzungen, die die Polymere enthalten, sowie Verbundkörper, die mit Hilfe der Zusammensetzung hergestellt werden.

### Stand der Technik

Die Erfindung betrifft das Gebiet der Hybrid-funktionellen Polymere. Damit werden Polymere bezeichnet, die mindestens zwei unterschiedliche Funktionalitäten enthalten. Solche Polymere sind für eine Vielzahl von Anwendungen von Bedeutung. Grundsätzlich können Polymere mit mehreren Funktionalitäten mehrere unterschiedliche Reaktionen eingehen, was die Herstellung komplexer Produkte ermöglicht. Daher ist es von grundlegender Bedeutung, vielseitig einsetzbare Hybrid-funktionelle Polymere und Verfahren zu ihrer Herstellung bereitzustellen.

Hybridfunktionelle Polymere werden beispielsweise in Klebstoffen, als Primer zur Verbesserung der Haftung auf Oberflächen, als Dichtstoffe oder als Aktivatoren eingesetzt. Bei der Verwendung als Klebe- oder Primerschicht wird beispielweise eine Funktionalität so ausgewählt, dass sie mit einer Oberfläche reagiert, während eine zweite Funktionalität mit einem Substrat reagiert. Auf diese Weise können Substrate an Oberflächen fixiert werden.

Von besonderer Bedeutung sind Hybrid-funktionelle Polymere, die über mindestens zwei Isocyanatreste verfügen. Solche Hybrid-funktionelle Polymere können in der Polyurethan-Chemie eingesetzt werden, wobei die funktionellen Gruppen, die keine Isocyanat-Reste sind, die weitere Verarbeitung erlauben oder das Polyurethan mit besonderen Eigenschaften ausstatten.

Polyurethane (PU, DIN-Kurzzeichen: PUR) sind Kunststoffe oder Kunstharze, welche aus der Polyadditionsreaktion von Diolen, beziehungsweise Polyolen, mit Polyisocyanaten entstehen.

Polyurethane können je nach Wahl des Isocyanats und des Polyols unterschiedliche Eigenschaften aufweisen. Im Wesentlichen werden die späteren Eigenschaften durch die Polyolkomponente bestimmt, weil oftmals zum Erreichen gewünschter Eigenschaften nicht die Isocyanatkomponente angepasst (also chemisch verändert) wird, sondern die Polyolkomponente.

Aus PU werden zahlreiche Produkte hergestellt, wie z.B. Dichtungen, Schläuche, Fussböden, Lacken, und insbesondere auch Klebstoffe.

In der Technik finden darüber hinaus seit langem spezielle Copolymere Anwendung, welche als sogenannte Flüssigkautschuke bezeichnet werden. Durch die Verwendung von chemisch reaktiven Gruppen, wie Epoxid-, Carboxyl- Vinyl- oder Aminogruppen sind derartige Flüssigkautschuke chemisch in die Matrix einbaubar. So existieren beispielsweise seit langem reaktive Flüssigkautschuke aus Butadien/Acrylonitril-Copolymere, welche mit Epoxid-, Carboxyl-, Vinyl- oder Aminogruppen terminiert sind und die unter dem Handelsnamen Hypro™ (früher Hycar^{®}) von Nanoresins AG, Deutschland, bzw. Emerald Performance Materials LLC) angeboten werden.

Als Ausgangsbasis wird hierfür stets das Carboxylgruppen terminierte Butadien/Acrylonitril-Copolymer (CTBN) verwendet, zu welchem üblicherweise ein starker Überschuss an einem Diamin, Diepoxid oder Glycidyl(meth)acrylat zugesetzt wird. Dies führt jedoch dazu, dass sich einerseits eine hohe Viskosität bildet oder andererseits, dass sich ein sehr hoher Gehalt an unumgesetztem Diamin, Diepoxid oder Glycidyl(meth)acrylat ergibt, welches entweder aufwändig entfernt werden muss oder aber die mechanischen Eigenschaften stark negativ beeinflusst.

Die Verwendung derartiger epoxid-, carboxyl-, amin-, oder vinylfunktioneller Butadien/Acrylontirilpolymere in Klebstoffen ist bereits bekannt.

Hydroxylfunktionelle Varianten hiervon, welche für die Polyurethanchemie interessanter sind als aminofunktionelle Produkte und als Polyole zur Umsetzung mit der Isocyanat-Komponente dienen, sind technisch anspruchsvoll und aufwändig herstellbar und werden meist durch Umsetzung von CTBN mit Ethylenoxid erhalten. Hierdurch entstehen primäre Alkohol-Endgruppen. Die so entstehenden Polyethylenglycolgruppen sind im Kontakt mit Wasser zudem nachteilig.

Beispielsweise offenbart US 4,444,692 die Herstellung hydroxylterminierter reaktiver Flüssigpolymere durch Umsetzen von Ethylenoxid in Gegenwart eines Amin-Katalysators mit einem carboxylterminierten reaktiven Flüssigpolymer. Hierbei ergeben sich, wie oben angesprochen, primäre Alkohol-Endgruppen im Polymer.

US 3,712,916 beschreibt ebenfalls hydroxylterminierte Polymere, die als Klebstoffe und Dichtmaterialien nützlich sind. Diese hydroxylterminierten Polymere werden durch Reaktion carboxylterminierter Polymere ebenfalls mit Ethylenoxiden in Gegenwart eines tertiären Amino-Katalysators hergestellt.

Weitere Wege zur Herstellung hydroxylfunktioneller Varianten sind die Umsetzung der endständigen Carbonsäuren mit Aminoalkoholen, bzw. niedermolekularen Diolen. In beiden Fällen muss mit grossen Überschüssen gearbeitet werden, was eine aufwändige Aufarbeitung nach sich zieht.

US 4,489,008 offenbart hydrolytisch stabile hydroxylterminierte Flüssigpolymere, die in der Herstellung von Polyurethanen von Nutzen sind. Diese werden durch Umsetzen von zumindest einem Aminoalkohol mit einem carboxylterminierten Polymer hergestellt. Die Umsetzung eines carboxylterminierten Polymers mit mindestens einer Verbindung, die mindestens eine Epoxidgruppe aufweist, ist nicht offenbart. Gegenüber den herkömmlichen Polyurethanen wird die verbesserte hydrolytische Stabilität des Endproduktes betont.

US 3,551,472 beschreibt hydroxylterminierte Polymere, die durch Reaktion carboxylterminierter Polymere mit einem C₃-C₆-Alkylen-Diol in Gegenwart eines sauren Katalysators hergestellt werden. Es ist angegeben, dass diese als Klebstoffe und Dichtmaterialien von Nutzen sind.
Desgleichen beschreibt US 3,699,153 hydroxylterminierte Polymere, die durch Reaktion carboxylterminierter Polymere mit einem C₃-C₆-Alkylen-Diol hergestellt werden.
EP-A-1 916 272 beschreibt hitzehärtende Epoxidharzzusammensetzungen, welche mindestens ein Epoxidharz, mindestens ein spezifisch endständig blockiertes Polyurethanpolymer sowie mindestens ein spezifisch Epoxidgruppen-terminiertes Polyurethanprepolymer umfassen.

### Darstellung der Erfindung

Der vorliegenden Erfindung liegt die Aufgabe zugrunde, Hybrid-funktionelle Polymere bereitzustellen, die die genannten Probleme überwinden. Es sollen neue Hybrid-funktionelle Polymere und Verfahren zu ihrer Herstellung bereitgestellt werden. Die Polymere sollen auf vergleichsweise einfache Weise herstellbar sein. Das Herstellungsverfahren soll es ermöglichen, Polymere variabel mit möglichst vielen verschiedenen Funktionalitäten auszustatten.

Der vorliegenden Erfindung liegt ausserdem die Aufgabe zugrunde, verbesserte Zusammensetzungen, insbesondere Klebstoffe, Dichtstoffe und Primer bereitzustellen, die eine verbesserte Haftung auf unterschiedlichsten Untergründen aufweisen. Es ist eine weitere Aufgabe der vorliegenden Erfindung, Zähigkeitsverbesserer mit funktionellen Endgruppen zur Verfügung zu stellen, die in der Lage sind, die im Stand der Technik genannten Probleme zu überwinden und insbesondere die technisch anspruchsvolle und aufwändige Umsetzung der Carboxylgruppen-terminierten Polymere mit Ethylenoxid zu umgehen.

Eine besondere Aufgabe der Erfindung ist es, Polyisocyanat-Verbindungen mit mindestens einer weiteren Funktionalität, sowie Polyurethanzusammensetzungen für die genannten Anwendungen bereitzustellen.

Die Vorsilbe "poly", die in der vorliegenden Erfindung für Substanzbezeichnungen wie "Polyisocyanat" verwendet wird, weist im Allgemeinen darauf hin, dass die jeweilige Substanz formal mehr als eine der in ihrer Bezeichnung vorkommenden funktionellen Gruppe pro Molekül enthält.
Als "Phenolgruppen" werden im vorliegenden Dokument Hydroxylgruppen, welche unmittelbar an einen aromatischen Kern gebunden sind, verstanden, unabhängig davon, ob eine oder auch mehrere derartige Hydroxylgruppen direkt an den Kern gebunden sind.
Das der Erfindung zugrunde liegende Problem wird überraschenderweise gelöst durch Hybrid-funktionelle Polymere, Zusammensetzungen, Verbundkörper, Verfahren zu ihrer Herstellung und ihre Verwendung gemäss den Patentansprüchen 1 bis 20.
Es ist ein wesentliches Ziel dieser Erfindung, hybridfunktionelle Polymere, das heisst Polymere, welche zwei unterschiedliche chemisch reaktive funktionelle Gruppen aufweisen, zur Verfügung zu stellen.

Gegenstand der Erfindung ist ein Hybrid-funktionelles Polymer der Formel (I): 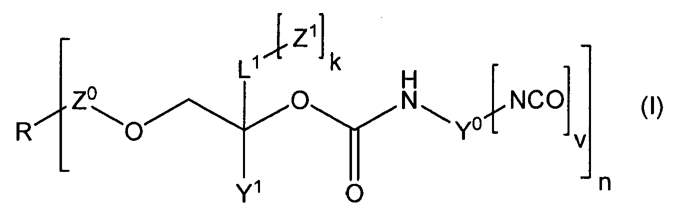 wobei R für einen n-wertigen polymeren Rest steht;
- Z⁰ für: -CO- oder -X-CO-R²-CO- oder -X-CO-[X¹]ₘA- steht;
X für O, NR⁴ oder S steht, wobei R⁴ seinerseits für H oder eine Alkylgruppe mit 1 bis 10 Kohlenstoffatomen steht;
X¹ für NR⁴, CH₂ oder C₂H₄ steht und m = 0 oder 1 ist;
R² für einen Rest einer Dicarbonsäure nach Entfernung der zwei Carboxylgruppen, insbesondere für eine gesättigte oder ungesättigte, gegebenenfalls substituierte Alkylengruppe mit 1 bis 6 Kohlenstoffatomen oder eine, gegebenenfalls substituierte, Phenylengruppe, steht;
A für einen, gegebenenfalls substituierten, Arylenrest steht;
- Y⁰ für: einen (v+1)-wertigen Rest eines Polyisocyanates nach Entfernung der Isocyanatgruppen steht;
- Y¹ für: H oder für eine Methylgruppe steht;
- Z¹ für: eine funktionelle Gruppe, welche verschieden von NCO ist und welche nicht reaktiv mit Isocyanatgruppen ist, steht;
- L¹ für: einen (k+1)-wertigen organischen Rest steht, welcher die funktionelle Gruppe Z¹ mit dem Rest des Moleküls der Formel (I) verbindet;
- k für: 1 oder 2 oder 3 steht;
- v für: 1 oder 2 oder 3 steht und
- n für: 2 oder 3 oder 4 steht.

Gegenstand der Erfindung ist auch ein Hybrid-funktionelles Polymer der Formel (II): 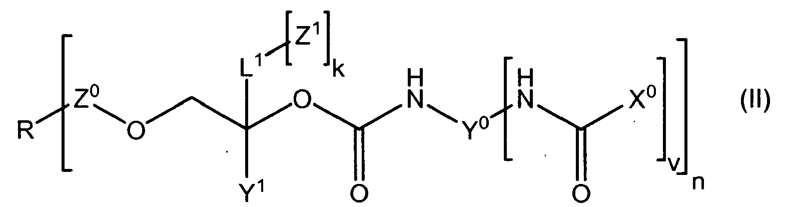 wobei R für einen n-wertigen polymeren Rest steht;
- Z⁰ für: -CO- oder -X-CO-R²-CO- oder -X-CO-[X¹]ₘA- steht;
X für O, NR⁴ oder S steht, wobei R⁴ seinerseits für H oder eine Alkylgruppe mit 1 bis 10 Kohlenstoffatomen steht;
X¹ für NR⁴, CH₂ oder C₂H₄ steht und m = 0 oder 1 ist;
R² für einen Rest einer Dicarbonsäure nach Entfernung der zwei Carboxylgruppen, insbesondere für eine gesättigte oder ungesättigte, gegebenenfalls substituierte Alkylengruppe mit 1 bis 6 Kohlenstoffatomen oder eine, gegebenenfalls substituierte, Phenylengruppe, steht;
A für einen, gegebenenfalls substituierten, Arylenrest steht;
- Y⁰ für: einen (v+1)-wertigen Rest eines Polyisocyanates nach Entfernung der Isocyanatgruppen steht;
- Y¹: für H oder für eine Methylgruppe steht;
- Z¹ für: eine funktionelle Gruppe, welche verschieden von NCO ist und welche nicht reaktiv mit Isocyanatgruppen ist, steht;
- L¹ für: einen (k+1)-wertigen organischen Rest steht, welcher die funktionelle Gruppe Z¹ mit dem Rest des Moleküls der Formel (II) verbindet;
- X⁰ für: eine von Z¹ verschiedene Blockierungsgruppe, welche sich bei einer Temperatur von über 100°C abspaltet, oder für einen Rest der Formel (II') steht 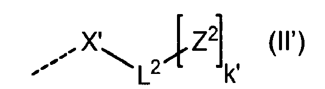
wobei Z² für eine funktionelle Gruppe, welche verschieden von Z¹ und von NCO ist und welche mit Isocyanatgruppen nicht oder weniger reaktiv als die Gruppe HX' ist, steht;
L² für einen (k'+1)-wertigen organischen Rest steht, welcher die funktionelle Gruppe Z² mit dem Rest des Moleküls der Formel (II) verbindet,
X' für O, NH, NR³ oder S ist,
   wobei R³ für einen Alkylrest steht, der verzweigt oder unverzweigt und/oder gesättigt oder ungesättigt ist, oder für einen Aryl- oder Alkarylrest steht, der gegebenenfalls substituiert ist, oder für einen Rest der Formel -L²-[Z²]_{k'} steht;
k' für 1 oder 2 oder 3 steht;
- k für: 1 oder 2 oder 3 steht;
- v für: 1 oder 2 oder 3 steht und
- n für: 2 oder 3 oder 4 steht.

In weiteren bevorzugten Ausführungsformen der Erfindung steht Z⁰ für -CO- und R für ein Carboxylgruppen-terminiertes Butadien-Acrylonitril-Copolymer (CTBN) nach Entfernung der terminalen Carboxylgruppen.

In weiteren bevorzugten Ausführungsformen der Erfindung steht Z⁰ für -X-CO-R²-CO- steht und R für einen n-wertigen Rest eines Polymeren R¹-[XH]ₙ nach Entfernung von n Gruppen XH.

In weiteren bevorzugten Ausführungsformen der Erfindung steht R¹ für ein Poly(oxyalkylen)polyol, Polyesterpolyol, Poly(oxyalkylen)polyamin, Polyalkylenpolyol, Polycarbonatpolyol, Polymercaptan, Polyhydroxypolyurethan oder Hydroxylterminiertes Polysiloxan nach Entfernung der Hydroxyl-, Amin-, oder Mercaptangruppen.

In weiteren bevorzugten Ausführungsformen der Erfindung steht Z⁰ für -X-CO-[X1]ₘA- und A für eine Phenylengruppe.

In einer weiteren bevorzugten Ausführungsform der Erfindung ist Z¹ ausgewählt aus der Gruppe bestehend aus (Meth)acrylat, Silan, Vinyl, Allyl, Nitril und Epoxid.
Als "Silan" werden im vorliegenden Dokument Verbindungen bezeichnet, in denen zum einen mindestens eine, üblicherweise 2 oder 3, Alkoxygruppen, beziehungsweise Acyloxygruppen, direkt an das Silicium-Atom gebunden sind (über eine Si-O-Bindung), und die zum anderen mindestens einen direkt an das Silicium-Atom (über eine Si-C-Bindung) gebundenen organischen Rest aufweisen und keine Si-O-Si-Bindungen aufweisen. Entsprechend dazu bezeichnet der Begriff "Silangruppe" die an den organischen Rest des Organoalkoxysilans, beziehungsweise Organoacyloxysilans, gebundene Silicium-haltige Gruppe.

In einer weiteren bevorzugten Ausführungsform der Erfindung steht L¹ für eine Methylengruppe.

In einer weiteren bevorzugten Ausführungsform der Erfindung steht Y⁰ für ein Polyisocyanat nach Entfernung der Isocyanatgruppen, wobei das Polyisocyanat ausgewählt ist aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Biurete dieser genannten Polyisocyanate, Uretdione dieser genannten Polyisocyanate und Isocyanurate dieser genannten Polyisocyanate.

In einer weiteren bevorzugten Ausführungsform der Erfindung ist Z² ausgewählt aus der Gruppe bestehend aus Isocyanat, Epoxid, Glycidyl, Amin, (Meth)acrylat, Silan, Vinyl, Allyl und Nitril.

X⁰ ist einerseits eine Blockierungsgruppe, welche sich bei einer Temperatur von über 100°C abspaltet. Die Blockierungsgruppe lässt sich über eine Reaktion mit der Isocyanatgruppe eines Hybrid-funktionellen Polymers der Formel (I) erhalten. Bei der Abspaltung hierbei wieder eine Isocyanatgruppe. Somit kann die Gruppierung 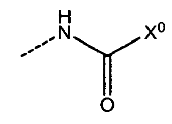 als blockierte Isocyanatgruppe bezeichnet werden.

In einer weiteren bevorzugten Ausführungsform der Erfindung ist X⁰ ein Rest, welcher ausgewählt ist aus der Gruppe bestehend aus 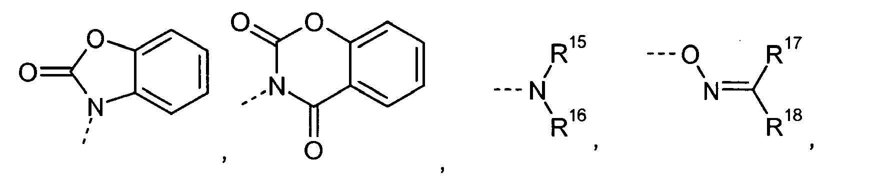 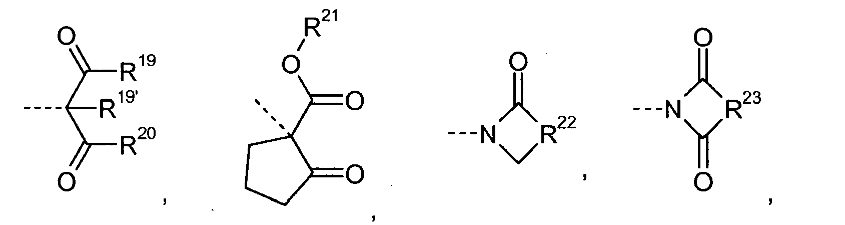 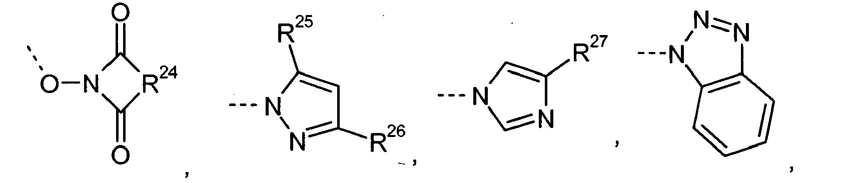 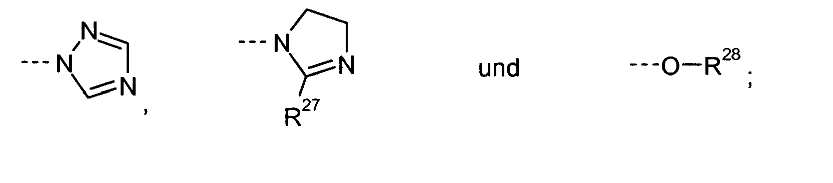 wobei
R¹⁵, R¹⁶, R¹⁷ und R¹⁸ je unabhängig voneinander für eine Alkyl- oder Cycloalkyl- oder Aryl- oder Aralkyl- oder Arylalkyl-Gruppe steht oder R¹⁵ zusammen mit R¹⁶, oder R¹⁷ zusammen mit R¹⁸, einen Teil eines 4- bis 7- gliedrigen Rings bilden, welcher allenfalls substituiert ist;
R¹⁹, R^{19'} und R²⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
R²¹ für eine Alkylgruppe steht,
R²², R²³ und R²⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R²⁵, R²⁶ und R²⁷ je unabhängig voneinander für H oder für eine Alkylgruppe oder für eine Arylgruppe oder eine Aralkylgruppe stehen; und
R²⁸ für eine Aralkylgruppe oder für eine ein- oder mehrkernige substituierte oder unsubstituierte Aromatengruppe steht, welche gegebenenfalls aromatische Hydroxylgruppen aufweist. Als R²⁸ besonders geeignet ist 3-Pentadecenylphenyl, bzw. Cardanol (aus Cashewnuss-Schalen-Öl) nach Entfernung der phenolischen OH-Gruppe.

Gegenstand der Erfindung ist auch ein Verfahren zur Herstellung eines Hybrid-funktionellen Polymers der Formel (I) umfassend die Schritte:
a) Bereitstellen eines Carboxylgruppen-terminierten Polymers der Formel (IIIa) oder (IIIb) oder eines Phenolgruppen-terminierten Polymers der Formel (IV), insbesondere der Formel (IVa) und einer Epoxidverbindung der Formel (V): 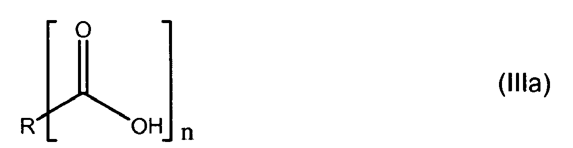 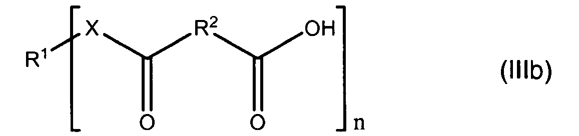 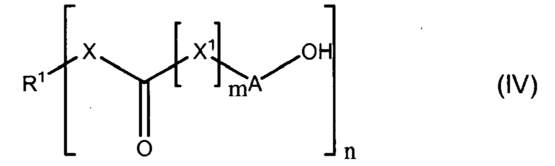 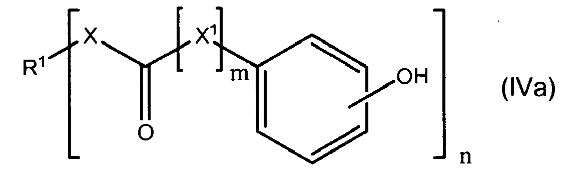 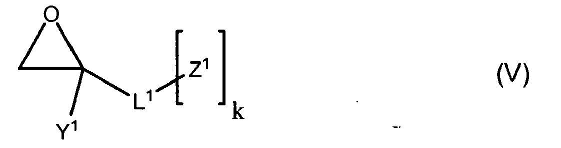
b) Reaktion der Verbindungen aus Schritt a) zu einer Hydroxyverbindung der Formel (VI): 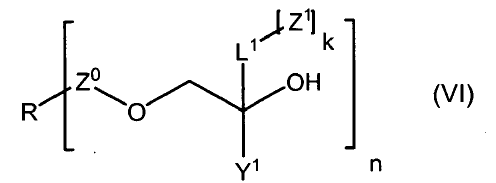
c) Zugabe eines Polyisocyanates der Formel (VII): 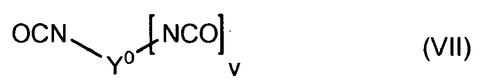 und Umsetzung zu einem Hybrid-funktionellen Polymer der Formel (I).

Gegenstand der Erfindung sind auch die Reaktionsprodukte aus dieser Umsetzung.

Verbindungen der Formel (IIIa) sind insbesondere Butadien-Acrylnitril-Copolymere, wie sie beispielsweise unter dem Namen Hypro™ (früher Hycar^{®}) CTBN von Nanoresins AG, Deutschland, bzw. Emerald Performance Materials LLC kommerziell erhältlich sind.

Bevorzugt weist das Polymer der Formel (IIIa) eine Struktur der Formel (IIIc) auf.

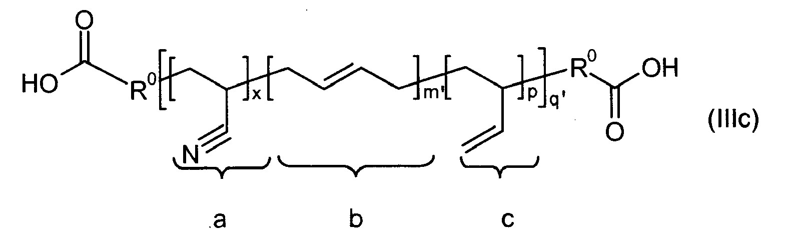

R⁰ steht für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnenden Ausführungsform stellt der Substituent R⁰ einen Substituenten der Formel (X) dar, wobei die gestrichelten Linien die Anbindungsstellen darstellen

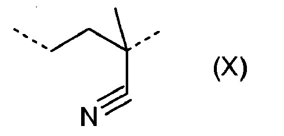

Weiterhin steht der Index q' für einen Wert zwischen 40 und 100, insbesondere zwischen 50 und 90. Weiterhin stellen die Bezeichnungen b und c die Strukturelemente, welche von Butadien stammen und a das Strukturelement, welches von Acrylonitril stammt, dar. Die Indices x, m', und p stellen ihrerseits Werte dar, die das Verhältnis der Strukturelement a, b und c zueinander beschreiben. Der Index x steht für Werte von 0.05 - 0.3, der Index m' für Werten von 0.5 - 0.8, der Index p für Werte von 0.1 - 0.2 mit der Voraussetzung, dass die Summe von x, m' und p gleich 1 ist. Bevorzugt ist x < 0.26, bevorzugt < 0.20.

Dem Fachmann ist klar, dass die in Formel (IIIc) als vereinfachte Darstellungen zu verstehen sind. Somit können die Bausteine a, b und c jeweils zufällig, abwechselnd oder blockweise zueinander angeordnet sein. Insbesondere stellt somit Formel (IIIc) nicht zwangsläufig ein Triblock-Copolymer dar. Als besonders bevorzugte Butadien-Acrylnitril-Copolymere gelten Hypro™ CTBN 1300X31, Hypro™ CTBN 1300X8, Hypro™ CTBN 1300X13 und Hypro™ CTBN 1300X9 von Nanoresins AG, Deutschland, bzw. Emerald Performance Materials LLC.

Andererseits lassen sich Carboxylgruppen-terminierte Polymere auch durch Umsetzung von Hydroxyl-, Amin- oder Thiol-endständigen Polymeren mit Dicarbonsäuren, bzw. deren Anhydriden, erhalten. Die auf diesem Weg erhältlichen Carboxylgruppen-terminierten Polymere lassen sich durch die Strukturformel (IIIb) darstellen.

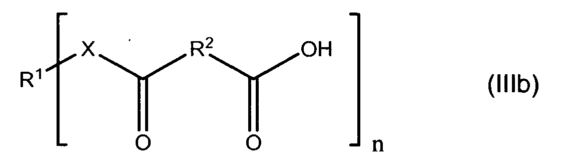

X steht hierbei für O, S oder NR⁴, und R⁴ steht für H oder eine Alkylgruppe mit 1 bis 10 Kohlenstoffatomen. R¹ steht für einen n-wertigen Rest eines Polymeren R¹-[XH]ₙ nach dem Entfernen der endständigen -XH Gruppen. R² steht für einen Rest einer Dicarbonsäure nach Entfernung der zwei Carboxylgruppen, insbesondere eine gesättigte oder ungesättigte, gegebenenfalls substituierte Alkylengruppe mit 1 bis 6 Kohlenstoffatomen oder eine, gegebenenfalls substituierte, Phenylengruppe.

In einer zweiten Ausführungsform können zur Herstellung von Polymeren der Formel (I) Hydroxyphenyl-endständige Polymere eingesetzt werden, wie sie durch die Umsetzung von Hydroxyl-, Amin- oder Thiol-endständigen Polymeren mit Hydroxyphenyl-funktionellen Carbonsäuren oder deren Estern erhalten werden. Die auf diesem Weg erhältlichen Hydroxyphenyl-terminierten Polymere lassen sich durch die Strukturformel (IVa) darstellen.

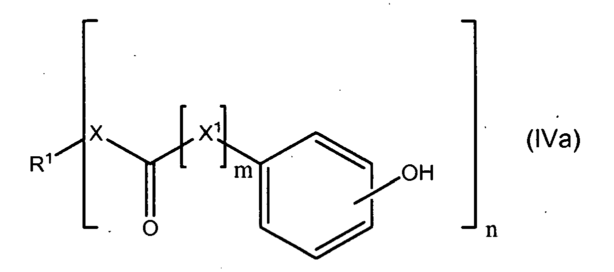

Dabei steht X¹ für NR⁴, CH₂, oder C₂H₄ und m steht für 0 oder 1. R¹, X, NR⁴ und n sind bereits vorgängig definiert worden.

Es versteht sich aber, dass die Herstellung des Polymers mit mindestens zwei Carboxyl- und/oder Phenolgruppen nicht auf diese oben aufgeführten Herstellwege beschränkt ist und der Fachmann jederzeit alternative Verfahren einsetzen kann.

Vorzugsweise steht R¹ oder R für ein Poly(oxyalkylen)polyol, Polyesterpolyol, Poly(oxyalkylen)polyamin, Polyalkylenpolyol, Polycarbonatpolyol Polymercaptan oder Polyhydroxypolyurethan nach Entfernung der Hydroxyl-, Amin- oder Mercaptangruppen.

In einer Ausführungsform ist R¹ oder R ein Polyol nach Entfernung der Hydroxylgruppen. Derartige Polyole sind bevorzugt Diole oder Triole, insbesondere
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 300 - 20'000 Dalton, Polyoxybutylendiole und - triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol^{®} geliefert werden;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethyl-propan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether);
- Polyole, wie sie durch Reduktion von dimerisierten Fettsäuren enthalten werden.

In einer anderen Ausführungsform ist R¹ oder R ein Polyamin nach Entfernung der Aminogruppen. Derartige Polyamine sind insbesondere Diamine oder Triamine, bevorzugt aliphatische oder cycloaliphatische Diamine oder Triamine. Insbesondere sind dies Polyoxyalkylen-Polyamine mit zwei oder drei Aminogruppen, beispielsweise erhältlich unter dem Namen Jeffamine^{®} (von Huntsman Chemicals), unter dem Namen Polyetheramin (von BASF) oder unter dem Namen PC Amine^{®} (von Nitroil), sowie Mischungen der vorgenannten Polyamine.

Bevorzugte Diamine sind Polyoxyalkylen-Polyamine mit zwei Aminogruppen, insbesondere solche der Formel der Formel (VIII).

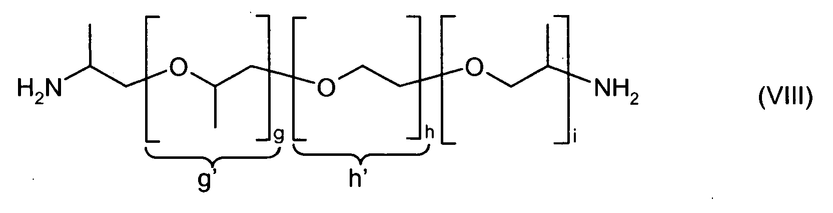

Hierbei stellen g' das Strukturelement, welches von Propylenoxid stammt, und h' das Strukturelement, welches von Ethylenoxid stammt, dar. Zudem stehen g, h und i je für Werte von 0 bis 40, mit der der Massgabe, dass die Summe von g, h und i ≥ 1 ist.

Insbesondere sind Molekulargewichte zwischen 200 und 10'000 g/mol bevorzugt.

Insbesondere bevorzugte Diamine sind Jeffamine^{®}, wie sie unter der D-Linie und ED-Linie von Huntsman Chemicals angeboten werden, wie zum Besipiel Jeffamine^{®} D-230, Jeffamine^{®} D-400, Jeffamine^{®} D-2000, Jeffamine^{®} D-4000, Jeffamine^{®} ED-600, Jeffamine^{®} ED-900 oder Jeffamine^{®} ED-2003.
Im Weiteren bevorzugte Triamine werden beispielsweise unter der Jeffamine^{®} T-Line von Huntsman Chemicals vertrieben, wie beispielsweise Jeffamine^{®} T-3000, Jeffamine^{®} T-5000 oder Jeffamine^{®} T-403.

In einer weiteren Ausführungsform ist R¹ oder R ein Polymercaptan nach Entfernung der Mercaptogruppen. Geeignete Polymercaptane sind beispielsweise Polymercaptocetate von Polyolen. Es handelt sich hierbei insbesondere um Polymercaptocetate der folgenden Polyolen:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 300 - 20'000 Dalton, Polyoxybutylendiole und -triole, Polyoxypropylendiole und - triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol^{®} geliefert werden;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethyl-propan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether);
- Polyole, wie sie durch Reduktion von dimerisierten Fettsäuren enthalten werden.

Insbesondere bevorzugt sind Glycol-dimercaptoacetat, Trimethylolpropantrimercaptoacetat und Butandiol-dimercaptoacetat.

Als meist bevorzugte Polymercaptane gelten Dimercaptane der Formel (IX).

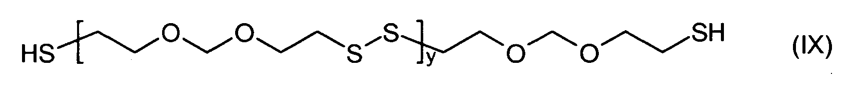

Hierbei steht y für einen Wert von 1 bis 45, insbesondere von 5 bis 23. Die bevorzugten Molekulargewichte sind zwischen 800 und 7500 g/mol, insbesondere zwischen 1000 und 4000 g/mol. Derartige Polymercaptane sind kommerziell erhältlich unter der Thiokol^{®} LP-Reihe von Toray Fine Chemicals Co.

Gemäss einer weiteren Ausführungsform wird das Carboxylgruppen- oder Phenolgruppen-terminierten Polymer der Formel (IIIb), (IV) oder (IVa) hergestellt durch Umsetzung von mindestens einem hydroxyl-, amin- oder thiol- funktionellen Polymeren mit mindestens einer Hydroxyphenyl-funktionellen Carbonsäure oder deren Ester oder Lacton, bzw. mit Benzoxazolinon, bzw. mit mindestens einer Dicarbonsäure oder einem Dicarbonsäure-Anhydrid.

Bevorzugte Hydroxyphenyl-funktionelle Carbonsäuren sind ortho-, meta- oder para-Hydroxy-benzoesäure oder 2-, 3- oder 4-Hydroxy-phenylessigsäure oder 2-, 3- oder 4-Hydroxy-phenylpropionsäure.

Bevorzugte Hydroxyphenyl-funktionelle Carbonsäureester sind ortho-, meta- oder para-Hydroxy-benzoesäure-methylester, ortho-, meta- oder para-Hydroxy-benzoesäure-ethylester, ortho-, meta- oder para-Hydroxy-benzoesäure-isopropylester.

Bevorzugte Lactone von Hydroxyphenyl-funktionellen Carbonsäuren sind Benzofuran-2-on, Benzodihydro-pyron (=Dihydrocoumarin).

Bevorzugte Dicarbonsäureanhydride sind Phthalsäureanhydrid, Maleinsäureanhydrid, Bernsteinsäureanhydrid, Methylbernsteinsäureanhydrid, Isobutenbernsteinsäureanhydrid, Phenylbernsteinsäure-anhydrid, Itaconsäure-anhydrid, cis-1,2,3,6-Tetrahydrophthalsäure-anhydrid, Hexahydrophthalsäure-anhydrid, Norbornan-2,3-dicarbonsäure-anhydrid, Hexahydro-4-methylphthal-säureanhydrid, Glutarsäureanhydrid, 3-Methyl-Glutarsäureanhydrid, (±)-1,8,8-Trimethyl-3-oxabicyclo[3.2.1]octane-2,4-dione, Oxepan-2,7-dion.

Diese Umsetzung zur Herstellung des Polymers der Formel (IIIa), (IIIb) oder (IV) erfolgt vorzugsweise in Anwesenheit eines Katalysators bei erhöhten Temperaturen von 50°C bis 150°C, vorzugsweise 70°C bis 130°C. Als Katalysator wird vorzugsweise Triphenylphosphin eingesetzt, die Reaktion kann wahlweise unter Schutzgas oder Vakuum erfolgen. Beispiele für weitere einsetzbare Katalysatoren sind tertiäre Amine, quaternäre Phosphoniumsalze oder quaternäre Ammoniumsalze. Es kann aber für diese Umsetzung auch kein Katalysator eingesetzt, die Umsetzung erfolgt dann jedoch bei erhöhten Temperaturen von 80°C bis 200°C, vorzugsweise 90°C bis 180° Vorzugsweise wird ein molarer Überschuss der Epoxidgruppen gegenüber den Carboxyl- und/oder Phenolgruppen im Reaktionsgemisch gewählt. Hierbei beträgt das Verhältnis der Anzahl Epoxidgruppen gegenüber der Anzahl Carboxyl- und/oder Phenolgruppen 1:1 bis 50:1, vorzugsweise 1:1 bis 20:1, besonders bevorzugt 1:1 bis 10:1.

Als Polyisocyanat der Formel (VII) wird in einer bevorzugten Ausführungsform ein Diisocyanat oder ein Triisocyanat eingesetzt.

Als Polyisocyanate können aliphatische, cycloaliphatische oder aromatische Polyisocyanate, insbesondere Diisocyanate, verwendet werden. Insbesondere geeignet sind die folgenden:
- 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin.
- 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI).
- Oligomere (z.B. Biurete, Isocyanurate) und Polymere der vorgenannten monomeren Diisocyanate.
- Beliebige Mischungen der vorgenannten Polyisocyanate.

Bevorzugt sind monomere Diisocyanate, insbesondere MDI, TDI, HDI und IPDI.

Das Polyisocyanat der Formel (VII) wird insbesondere in einer derartigen Menge eingesetzt, dass das Verhältnis von NCO-Gruppen zu OH-Gruppen des beschriebenen Hydroxylgruppen aufweisenden Polymers der Formel (VI) in einem Verhältnis ≥ 1.1 bis 32 ist, so dass Isocyanatgruppen-endständige Polyadditionsprodukte entstehen. Insbesondere geeignet sind derartige Polyadditionsprodukte, welche aus einem Verhältnis NCO/OH-Verhältnis zwischen 1.5 und 2 entstehen.
Dem Fachmann ist klar, dass er die Menge an Polyisocyanat der Formel (VII) entsprechend erhöhen sollte, wenn weitere NCO-reaktive Verbindungen, beispielsweise die unten beschriebenen Isocyanatreaktiven Polymere der Formel (XI), bei dieser Umsetzung vorhanden sind.

Bei einer Variante des erfindungsgemässen Herstellungsverfahrens ist bei der Umsetzung des mindestens einen Polymers der Formel (VI) mit mindestens einem Polyisocyanat Der Formel (VII) zusätzlich noch mindestens ein weiteres isocyanatreaktives Polymer vorhanden. Dieses isocyanatreaktive Polymer ist vorzugsweise ausgewählt aus der Gruppe bestehend aus Poly(oxyalkylen)-polyol, Polyester-polyol, Polycarbonatpolyol, Poly(oxyalkylen)polyamin, Polyalkylenpolyol und Polymercaptan. Bezüglich Beispielen für diese Substanzgruppen sei auf die obigen Ausführungen zu R¹ bzw. R¹-[XH]ₙ verwiesen.

Vorzugsweise liegen Polymer (VI) und das (die) weiteren isocyanatreaktive Polymere in einem Gewichts-Mischverhältnis von 1:100 bis 100:1 vor.

Wie eingangs erwähnt ist das erfindungsgemässe Isocyanatgruppen-endständige Polyadditionsprodukt insbesondere in Klebstoffen verwendbar und insofern betrifft die vorliegende Erfindung eine Klebstoffzusammensetzung, die dieses enthält.

Aufgrund seiner speziellen Eigenschaften umfasst die vorliegende Erfindung die Verwendung des Polymers der Formel (VI) in der Polyurethan-Chemie, vorzugsweise als Härterkomponente oder Teil einer Härterkomponente in Zweikomponenten-Klebstoffen. Daneben sind vielfältige andere Anwendungen denkbar, beispielsweise in PU für Dichtungen, Schläuchen, Fussböden, Lacke, Dichtstoffe, Skier, Textilfasern, Laufbahnen in Stadien, Vergussmassen, und vieles mehr.

In einer bevorzugten Ausführungsform der Erfindung wird in Schritt a) die Epoxidverbindung der Formel (V) im stöchiometrischen Überschuss in Bezug zu den Carboxylgruppen zugesetzt. Der stöchiometrische Überschuss beträgt beispielsweise 1 bis 50%.

Die Umsetzung erfolgt vorzugsweise in Gegenwart eines Katalysators. Vorzugsweise erfolgt die Umsetzung bei erhöhter Temperatur. Die Temperatur kann beispielsweise zwischen 50 und 200°C, insbesondere zwischen 80 und 150°C liegen.

Die Epoxidverbindung der Formel (V) weist eine funktionelle Gruppe Z¹ auf, beispielsweise ausgewählt aus der Gruppe bestehend aus (Meth)acrylat-, Silyl-, Vinyl-, Allyl-, Nitril- und Epoxidylgruppe. In einer weiteren bevorzugten Ausführungsform der Erfindung ist die Epoxidverbindung der Formel (V) eine funktionalisierte Glycidyletherverbindung, die beispielsweise mit einer dieser funktionellen Gruppen substituiert ist.

Bei der erfindungsgemäss verwendeten funktionalisierten Glycidylgruppe handelt es sich vorzugsweise um einen funktionalisierten Glycidylether, Glycidylester, Glycidylamin, Glycidylamid oder Glycidylimid.

Die Glycidylverbindung kann auch mehr als eine Glycidylgruppe enthalten. Erfindungsgemäss wird die Synthese eines hydroxylterminierten Polymers der Formel (VI) dann bevorzugt so durchgeführt, das pro Glycidylverbindung jeweils nur eine Glycidylgruppe reagiert. Die mindestens eine weitere Glycidylgruppe verbleibt dann als funktionelle Gruppe Z¹ in dem hydroxylfunktionellen Polymer, das somit eine Epoxid-Funktionalität aufweist. Dies kann beispielsweise erreicht werden, wenn die Glycidylverbindung im Überschuss eingesetzt wird.

Gegenstand der Erfindung ist auch ein Verfahren zur Herstellung eines Hybrid-funktionellen Polymers nach Formel (II), umfassend die Schritte:
α) Bereitstellen eines Hybrid-funktionellen Polymers der Formel (I) und/oder eines erfindungsgemässen Verfahrensproduktes zur Herstellung einer Verbindung nach Formel (I),
β) Zugabe einer Verbindung der Formel HX⁰, bzw. HX'-L²-[Z²]_{k'} , und Umsetzung zu einem Hybrid-funktionellen Polymer der Formel (II).

Um eine effiziente Ausbeute an Formel (II) zu erhalten, wird vorzugsweise die Verbindung HX⁰, bzw. HX'-L²-[Z²]_{k'}, zumindest stöchiometrisch, bevorzugt in einem stöchiometrischen Überschuss der Gruppen HX⁰ bzw. HX' gegenüber der Isocyanatgruppen der Formel (I) eingesetzt.

Z² steht für eine funktionelle Gruppe, welche verschieden von Z¹ und verschieden von NCO ist. Es ist dem Fachmann klar, dass es zwar grundsätzlich auch möglich wäre, im Schritt β) eine entsprechende Verbindung mit Endgruppe Z¹ zu verwenden, dass aber in diesem Fall kein Hybrid-funktionelles Polymer der Formel (II) entstehen würde, ein derartiges Polymer nicht erfindungsgemäss wäre und deshalb auch die erwähnten Vorteile nicht aufweisen würde.
Die Gruppe Z² ist mit Isocyanatgruppen nicht oder weniger reaktiv als die Gruppe HX'. Um gewährleisten zu können, dass ein Polymer der Formel (II) entsteht, muss die Gruppe Z² weniger reaktiv als die Gruppe HX' sein. Bevorzugt ist die Gruppe Z² nicht reaktiv mit Isocyanatgruppen. Ein Beispiel für eine Verbindung, bei welchem die Gruppe für eine Verbindung HX'-L²-[Z²]_{k'}, bei welcher die Gruppe Z² weniger reaktiv als die Gruppe HX' ist, ist N-Phenylethylendiamin:

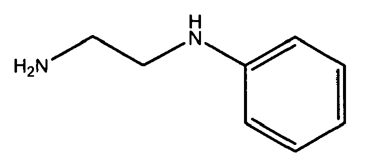

Die primäre aliphatische Aminogruppe dieser Verbindung ist mit Isocyanaten bedeutend reaktiver als die sekundäre aromatische Aminogruppe. Deshalb wird bei einem im stöchiometrischen eingesetzten Überschuss das Hybridfunktionelle Polymer der Formel (I) nach Schritt β) der Verbindung mit der primären Aminogruppe reagieren und so in diesem Polymer der Formel (II) die folgende Endgruppe X⁰

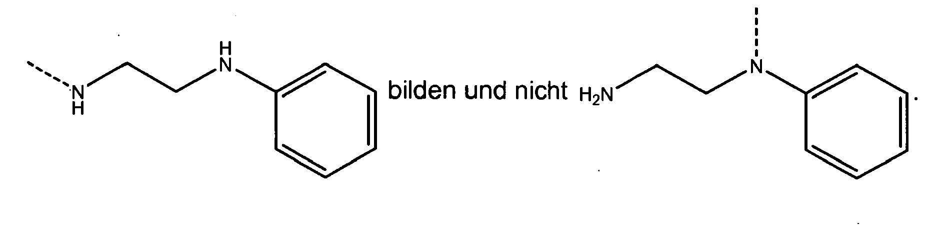

Gegenstand der Erfindung ist auch eine Zusammensetzung, die ein erfindungsgemässes Hybrid-funktionelles Polymer enthält.

Allgemein können die erfindungsgemässen Hybrid-funktionellen Polyisocyanate der Formel (I) mit geeigneten Reaktionspartnern umgesetzt werden, beispielsweise mit Hydroxyl-terminierten Epoxiden, Hydroxyl-terminierten Methacrylaten, Aminosilanen, thermisch labilen Blockierungsmitteln etc. Auf diese Weise werden die unterschiedlichsten Hybrid-funktionellen Polymere der Formel (II) erhalten. Bevorzugte "Hybrid-Funktionalitäten" sind beispielsweise Epoxid/Isocyanat, (Meth)acrylat/Isocyanat, (Meth)acrylat/blockiertes Isocyanat, (Meth)acrylat/Epoxid, Epoxid/blockiertes Isocyanat, Epoxid/Silan und (Meth)acrylat/Silan.

Aufgrund des Hybridcharakters der Hybrid-funktionellen Polymere der Formel (I) und (II) können derartige Polymere bzw. deren Zusammensetzungen in Systemen eingesetzt werden, welche zwei verschiedene Reaktionsmechanismen aufweisen. Derartige Systeme sind dem Fachmann als "Dual Cure"-Systeme bekannt. So eigenen sich derartige Polymere insbesondere für zweistufige Härtungen, d.h. bei denen die eine Funktionalität zu einer schnellen Reaktion bzw. Aushärtung führt und die andere Funktionalität zu einer langsame Reaktion führt.

Beispielsweise kann bei Hybrid-funktionellen Polymeren mit NCO-Gruppen oder mit Alkoxysilan die langsame Reaktion der Vernetzung die Reaktion der NCO Gruppen mit Luftfeuchtigkeit sein, während die schnelle Reaktion eine Reaktion durch eine Additionsreaktion oder Polymerisationsreaktion der zweiten Funktionalität, insbesondere Epoxid- oder (Meth)acrylat- oder Vinyl- oder Allylgruppen sein. Beispielsweise lässt sich ein derartiges Dual-Cure System in einem aus zwei Komponenten bestehenden System erreichen in dem in der ersten Komponente mindestens das Hybrid-funktionelle Polymer vorhanden ist und in der zweiten Komponente entweder PolymerisationsStarter oder Additionsmittel vorhanden ist. Konkrete Beispiele sind:

| **Erste Komponente** | **Zweite Komponente** | |
|---|---|---|
| *(Funktionalitäten des Polymers der Formel (I)*/*(II)* | | |
| *NCO*/*(Meth)acrylat* | Peroxid: | Radikalstarter für Vernetzung von *(Meth)acrylat* |
| *Silan*/*(Meth)acrylat* | Peroxid: | Radikalstarter für Vernetzung von *(Meth)acrylat* |
| *NCO*/*Vinyl* | Peroxid: | Radikalstarter für Vernetzung von *Vinyl* |
| *SilanlVinyl* | Peroxid: | Radikalstarter für Vernetzung von *Vinyl* |
| *Silan*/*Amin* | Polyepoxid: | Addition an *Amin* |
| *Silan*/*Amin* | Polyisocyanat: | Addition an *Amin* |
| *Silan*/*Epoxid* | Polyamin: | Addition an *Epoxid* |
| *Epoxid*/*(Meth)acrylat* | Polyamin: | Addition an *Epoxid* (langsam); |
| | | Addition an *(Meth)acrylat* (schnell) |
| *Epoxid*/*(Meth)acrylat* | Polyamin: | Addition an *Epoxid* (langsam) |
| | Peroxid: | Radikalstarter für Vernetzung von *Methacrylat* (schnell) |
| *Hydroxyl*/*(Meth)acrylat* | Polyisocyanat: | Addition an *Hydroxyl* (schnell) |
| | Peroxid: | Radikalstarter für Vernetzung von *(Meth)acrylat* (sehr schnell) |

2-Komponentige Dual-Cure Systeme lassen sich auch realisieren, indem die eine Funktionalität des Hybrid-funktionellen Polymeren der Formel (I) oder (II) über eine bei Raumtemperatur (RT) ablaufende Reaktion und die andere über eine bei Raumtemperatur gehinderte und erst bei erhöhter Temperatur ablaufende Reaktion vernetzt. Konkrete Beispiele hierfür sind:

| **Erste Komponente** | **Zweite Komponente** |
|---|---|
| *(Funktionalitäten Polymer der Formel (I)*/*(II)* Zusätzliche Inhaltsstoffe | |
| *Epoxid*/*(Meth)acrylat* Blockiertes Amin | Peroxid: Radikalstarter für RT-Vernetzung von *(Meth)acrylat* |
| *Hydroxyl*/*Epoxid* Blockiertes Amin | Polyisocyanat: RT-Addition an *Hydroxyl* |
| *Epoxid*/*blockiertes NCO* | Polyamin: RT-Addition an *Epoxy* |
| | Bei Heizen: *Deblockierung* der NCO-Gruppen und Reaktion mit den aus der Epoxid/Polyamin-Reaktion gebildeten OH-Gruppen |
| *Methacrylat*/*blockiertes NCO* Hydroxyfunktionelles (Meth)acrylat | Peroxid: Radikalstarter für RT-Vernetzung von *(Meth)acrylat* und Hydroxyfunktionelles (Meth)acrylat |
| | Bei Heizen: *Deblockierung* der NCO-Gruppen und Reaktion mit OH-Gruppen des copolymerisierten Hydroxyfunktionellen (Meth)acrylats |

Es lassen sich aber auch einkomponentige Dual-Cure Systeme realisieren, indem die eine Funktionalität des Hybrid-funktionellen Polymeren der Formel (I) oder (II) über eine bei Raumtemperatur ablaufende Reaktion und die andere über eine bei Raumtemperatur gehinderte und erst bei erhöhter Temperatur ablaufende Reaktion erfolgt. Konkrete Beispiele hierfür sind:

| *Funktionalitäten des Polymers der Formel (I) und (II)* | Thermisch aktivierbarer Härter |
|---|---|
| *Epoxid*/*NCO* | Blockiertes Amin: Bei Heizen: Härtung von *Epoxid* durch blockiertes Amin |
| | *NCO*: Langsame Härtung mit Luftfeuchtigkeit |

Es lassen sich schliesslich auch einkomponentige Dual-Cure Systeme realisieren, indem die eine Funktionalität des Hybrid-funktionellen Polymeren der (II) eine bei Raumtemperatur blockierte Funktionalität hat, und bei welcher sich die Blockierungsgruppe erst bei Temperaturen von über 100°C abspaltet und die zweite Funktionalität erst bei höherer Temperatur mit einem Hitzeaktivierbaren Härter reagiert. Konkrete Beispiele hierfür sind:

| *Funktionalitäten des Polymers der Formel (II)* | Thermisch aktivierbarer Härter |
|---|---|
| *Epoxid*/*blockiertes NCO* | Blockiertes Amin: Bei Heizen: Härtung von *Epoxid* durch blockiertes Amin Bei Heizen: *Deblockierung* der NCO-Gruppen und Reaktion |

Gegenstand der Erfindung ist auch die Verwendung eines erfindungsgemässen Hybrid-funktionellen Polymers für die Herstellung von Beschichtungen, Klebstoffen oder Dichtstoffen. Geeignete Klebstoffe sind beispielsweise Epoxid-, Polyurethan-, Silan-terminierte Polymere (STP) und Acrylatklebstoffe sowie die Verwendung als Primer und Aktivatoren. Bevorzugt ist auch die Verwendung als Dual-Cure-Kleber, also als zweistufig aushärtbarer Klebstoff. Die Polymere können auch zur Zähigkeitsmodifizierung eingesetzt werden.

Ein weiterer Gegenstand der Erfindung ist ein Verfahren zur Herstellung von Beschichtungen, Klebstoffen oder Dichtstoffen, wobei ein erfindungsgemässes Hybrid-funktionelles Polymer mit mindestens einer weiteren Komponente vermischt wird und eine Vernetzungsreaktion durchgeführt wird.

Gegenstand der Erfindung ist auch ein Verbundkörper, der durch Verkleben von mindestens zwei Substraten mittels einer erfindungsgemässen Zusammensetzung erhalten wird.

### Ausführungsbeispiele:

Die folgenden Beispiele dienen lediglich zur Illustration der vorgängig im Detail beschrieben Erfindung und limitieren die Erfindung in keinster Weise. In den Überschriften sind jeweils die funktionellen Gruppen angegeben, mit denen die Polymere ausgestattet werden.

### Ausführungsbeispiele 1 bis 4

Die Beispiele ***1*** bis ***4*** zeigen beispielhaft die Herstellung von Hydroxyverbindungen der Formel (VI) aus Carbonsäure-terminierten Polymeren und funktionellen Epoxiden.

### Ausführungsbeispiel 1: Epoxid / Hydroxyl

350g Hypro™ 1300X13 (Säurezahl ca. 32.0 mg KOH/g), 525g Epilox A 17-01 (Leuna-Harze, destillierter Bisphenol-A-diglycidylether, Epoxid-Gehalt ca. 5.75 eq/kg), 0.44g Butylhydroxytoluol (BHT) (Radikalfänger) und 1.75g Triphenylphosphin wurden zusammengegeben. Es wurde 5h bei 120°C unter Vakuum gerührt bis eine konstante Epoxid-Konzentration erreicht war (End-Epoxidgehalt: 3.26 eq/kg, theoretisch: 3.22 eq/kg). So wurde ein viskoses Polymer erhalten mit einer OH-Zahl von ca. 12.8 mg KOH/g.

Dieses Hybrid-funktionelle Polymer kann beispielsweise für die Herstellung von PUR-Polymeren oder für Epoxidharz-Polymere verwendet werden.

### Ausführungsbeispiel 2: Epoxid / Hydroxyl

600g des Polyether-Polyols PolyTHF® 2000 (BASF, OH-Zahl ca. 57.0 mg KOH/g) und 90.3g Phthalsäureanhydrid wurden zusammengegeben. Es wurde bei 150°C 2h unter Stickstoffatmosphäre und 30 Min. unter Vakuum gerührt. Dabei wurde ein Polymer mit einer Säurezahl von 49.3 mg KOH/g (theoretisch 49.5 mg KOH/g) erhalten. 200g dieses Carbonsäure-terminierten Polymers wurden mit 300g Epilox A 17-01 (destillierter Bisphenol-A-diglycidylether, Epoxid-Gehalt ca.5.75 eq) und 1.0g Triphenylphosphin) zusammengegeben. Es wurde 5h bei 120°C unter Vakuum gerührt bis eine konstante Epoxid-Konzentration erreicht war (End-Epoxidgehalt: 3.12 eq/kg, theoretisch: 3.10 eq/kg). So wurde ein viskoses Polymer erhalten mit einer OH-Zahl von ca. 19.7 mg KOH/g

Dieses Hybrid-funktionelle Polymer kann beispielsweise für die Herstellung von PUR-Polymeren oder für Epoxidharz-Polymere verwendet werden.

### Ausführungsbeispiel 3: Methacrylat / Hydroxyl

600g des Polyether-Polyols PolyTHF® 2000 (OH-Zahl ca. 57.0 mg KOH/g) und 90.3g Phthalsäureanhydrid wurden zusammengegeben. Es wurde bei 150°C 2h unter Stickstoffatmosphäre und 30 Min. unter Vakuum gerührt. Dabei wurde ein Polymer mit einer Säurezahl von 49.3 mg KOH/g (theoretisch 49.5 mg KOH/g) erhalten. 130g dieses Carbonsäure-terminierten Polymers wurden mit 18.4g Glycidylmethacrylat (Epoxid-Gehalt ca. 7.03 eq), 0.15g Butylhydroxytoluol (BHT) und 0.29g Triphenylphosphin zusammengegeben. Es wurde 5h bei 120°C unter Luft gerührt bis eine konstante Epoxid-Konzentration erreicht war (End-Epoxidgehalt: 0.08 eq/kg, theoretisch: 0.11 eq/kg). Anschliessend wurde 10 Minuten unter Vakuum entlüftet. So wurde ein viskoses Polymer erhalten mit einer OH-Zahl von ca. 42.5 mg KOH/g.

Dieses Hybrid-funktionelle Polymer kann beispielsweise für die Herstellung von PUR-Polymeren oder für (Meth)acrylharz-Polymere verwendet werden.

### Ausführungsbeispiel 4: Methacrylat / Hydroxyl

250g Dynacoll® 7380 AC-28 (Degussa, Säurezahl ca. 29.0 mg KOH/g), 21.1g Glycidylmethacrylat (Epoxid-Gehalt ca. 7.03 eq//kg), 0.27g BHT und 0.54g Triphenylphosphin wurden zusammengegeben. Es wurde 3h bei 120°C unter Luft gerührt bis eine konstante Epoxid-Konzentration erreicht war (End-Epoxidgehalt: 0.25 eq/kg, theoretisch: 0.07 eq/kg). Anschliessend wurde 10 Minuten unter Vakuum entlüftet. So wurde ein viskoses Polymer erhalten mit einer OH-Zahl von ca. 26.7 mg KOH/g.
Dieses Hybrid-funktionelle Polymer kann beispielsweise für die Herstellung von PUR-Polymeren oder für Methacrylharz-Polymere verwendet werden.

### Ausführungsbeispiele 5 bis 8

Die Ausführungsbeispiele ***5*** bis ***8*** zeigen die Herstellung von Hybrid-funktionellen Polymeren der Formel (I) mit endständigen Isocyanatgruppen.

### Ausführungsbeispiel 5: Epoxid / Isocyanat

310g des gemäss Ausführungsbeispiel ***1*** hergestellten Polyols (OH-Zahl ca. 12.8 mg KOH/g), 18.0g Isophorondiisocyanat (IPDI), 0.15g BHT (Radikalfänger) und 0.07g Dibutylzinn-dilaurat wurden zusammengegeben. Es wurde während 2h bei 90°C unter Vakuum gerührt, dabei wurde ein viskoses NCO-terminiertes Polymer erhalten (End-NCO-Gehalt: 0.95%, theoretisch 1.07%). Dieses NCO-terminierte Polymer kann beispielsweise für die Herstellung von PUR-Formulierungen oder für Epoxidharz-Formulierungen verwendet werden.

### Ausführungsbeispiel 6: Epoxid / Isocyanat

300g des gemäss Ausführungsbeispiel ***2*** hergestellten Polyols (OH-Zahl ca. 19.7 mg KOH/g), 26.0g IPDI, 0.16g BHT (Radikalfänger) und 0.08g Dibutylzinn-dilaurat wurden zusammengegeben. Es wurde während 2h bei 100°C unter Vakuum gerührt, dabei wurde ein viskoses NCO-terminiertes Polymer erhalten (End-NCO-Gehalt: 1.26%, theoretisch 1.56%).

Dieses NCO-/Epoxid-terminierte Polymer kann beispielsweise für die Herstellung PUR-Formulierungen oder für Epoxidharz-Formulierungen verwendet werden.

### Ausführungsbeispiel 7: Methacrylat / Isocyanat

240g des gemäss Ausführungsbeispiel ***3*** hergestellten Polyols (OH-Zahl ca. 42.5 mg KOH/g), 42.8g IPDI, 0.24g BHT (Radikalfänger) und 0.06g Dibutylzinn-dilaurat wurden zusammengegeben. Es wurde während 2h bei 90°C unter Vakuum gerührt, dabei wurde ein viskoses NCO-terminiertes Polymer erhalten (End-NCO-Gehalt: 3.15%, theoretisch 2.95%).

Dieses NCO-/Methacrylat-terminierte Polymer kann beispielsweise für die Herstellung PUR-Formulierungen oder für Epoxidharz-Formulierungen verwendet werden.

### Ausführungsbeispiel 8: Methacrylat / Isocyanat

150g des gemäss Ausführungsbeispiel ***4*** hergestellten Polyols (OH-Zahl ca. 26.7 mg KOH/g), 16.6g IPDI, 0.08g BHT (Radikalfänger) und 0.03g Dibutylzinn-dilaurat wurden zusammengegeben. Es wurde während 2h bei 90°C unter Vakuum gerührt, dabei wurde ein viskoses NCO-terminiertes Polymer erhalten (End-NCO-Gehalt: 2.25%, theoretisch 1.89%).

Dieses NCO-/Methacrylat-terminierte Polymer kann beispielsweise für die Herstellung PUR-Formulierungen oder für Methacrylharz-Formulierungen verwendet werden.

### Ausführungsbeispiele 9 bis 15

Die Ausführungsbeispiele ***9*** bis ***15*** zeigen die Herstellung von Hybrid-funktionellen Polymeren der Formel (II).

### Ausführungsbeispiel 9: Epoxid / blockiertes Isocyanat

100g des gemäss Ausführungsbeispiel ***5*** hergestellten Hybrid-Polymers (NCO-Gehalt ca. 0.95%) und 16.3g Cardolite NC-700 (Cardanol, Cardiolite) wurden zusammengegeben Es wurde während 3h bei 100°C unter Vakuum gerührt, bis der NCO-Gehalt unter 0.1 % gefallen war

Dieses hybridfunktionelle Polymer kann alleine oder in Abmischungen für die Herstellung Klebstoffen, Dämmstoffen, Beschichtungen, Primern etc. verwendet werden.

### Ausführungsbeispiel 10: Epoxid / Methacrylat

100g des gemäss Ausführungsbeispiel ***5*** hergestellten Hybrid-Polymers (NCO-Gehalt ca. 0.95%) und 3.6g Hydroxyethylmethacrylat (HEMA) wurden zusammengegeben. Es wurde während 2h bei 90°C unter Luft gerührt, bis der NCO-Gehalt unter 0.1% gefallen war. Anschliessend wurde während 10 Minuten unter Vakuum entgast.

Dieses hybridfunktionelle Polymer kann alleine oder in Abmischungen für die Herstellung Klebstoffen, Dämmstoffen, Beschichtungen, Primern etc. verwendet werden.

### Ausführungsbeispiel 11: Epoxid / Silan

Unter stetigem Rühren bei 90°C wurden zu 100g des gemäss Ausführungsbeispiel ***5*** hergestellten Hybrid-Polymers (NCO-Gehalt ca. 0.95%) tropfenweise insgesamt 3.9g 3-Aminopropyltrimethoxysilan (Silquest A-1110) zugegeben. Es wurde anschliessend während 2h bei 90°C unter Vakuum gerührt, bis der NCO-Gehalt unter 0.1 % gefallen war.

Dieses hybridfunktionelle Polymer kann alleine oder in Abmischungen für die Herstellung Klebstoffen, Dämmstoffen, Beschichtungen, Primern etc. verwendet werden.

### Ausführungsbeispiel 12: Epoxid / blockiertes Isocyanat

162g des gemäss Ausführungsbeispiel ***6*** hergestellten Hybrid-Polymers (NCO-Gehalt ca. 1.26%) und 19g Cardolite NC-700 wurden zusammengegeben. Es wurde während 3h bei 100°C unter Vakuum gerührt, bis der NCO-Gehalt unter 0.1 % gefallen war.

Dieses hybridfunktionelle Polymer kann alleine oder in Abmischungen für die Herstellung Klebstoffen, Dämmstoffen, Beschichtungen, Primern etc. verwendet werden.

### Ausführungsbeispiel 13: Methacrylat / Epoxid

137g des gemäss Ausführungsbeispiel ***7*** hergestellten Hybrid-Polymers (NCO-Gehalt ca. 3.15%) und 68.7g Polypox R20 (Mischung aus Trimethylolpropandi- und -triglycidylether) wurden zusammengegeben. Es wurde anschliessend während 2h bei 90°C unter Luft gerührt, bis der NCO-Gehalt unter 0.1 % gefallen war. Anschliessend wurde während 10 Minuten unter Vakuum entgast

Dieses hybridfunktionelle Polymer kann alleine oder in Abmischungen für die Herstellung Klebstoffen, Dämmstoffen, Beschichtungen, Primern etc. verwendet werden.

### Ausführungsbeispiel 14: Methacrylat / Silan

Unter stetigem Rühren bei 90°C wurden zu 110g des gemäss Ausführungsbeispiel ***7*** hergestellten Hybrid-Polymers (NCO-Gehalt ca. 3.15%) tropfenweise insgesamt 14.4g 3-Aminopropyltrimethoxysilan (Silquest A-1110) zugegeben. Es wurde anschliessend während 2h bei 90°C unter Luft gerührt, bis der NCO-Gehalt unter 0.1 % gefallen war. Anschliessend wurde während 10 Minuten unter Vakuum entgast.

Dieses hybridfunktionelle Polymer kann alleine oder in Abmischungen für die Herstellung Klebstoffen, Dämmstoffen, Beschichtungen, Primern etc. verwendet werden.

### Ausführungsbeispiel 15: Methacrylat / blockiertes Isocyanat

150g des gemäss Ausführungsbeispiel ***8*** hergestellten Hybrid-Polymers (NCO-Gehalt ca. 2.25%) und 13g Benzoxazolinon wurden zusammengegeben
Es wurde anschliessend während 3h bei 110°C unter Luft gerührt, bis der NCO-Gehalt unter 0.2% gefallen war. Anschliessend wurde während 10 Minuten unter Vakuum entgast.

Dieses hybridfunktionelle Polymer kann alleine oder in Abmischungen für die Herstellung Klebstoffen, Dämmstoffen, Beschichtungen, Primern etc. verwendet werden.

## Patentansprüche

1. Hybrid-funktionelles Polymer der Formel (I): 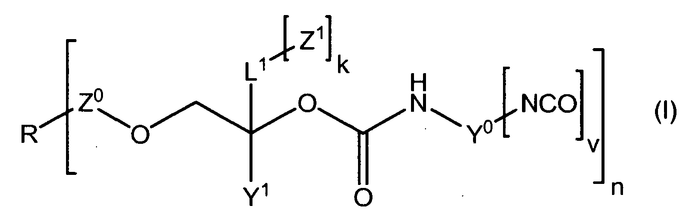 wobei R für einen n-wertigen polymeren Rest steht;
Z⁰ für -CO- oder -X-CO-R²-CO- oder -X-CO-[X¹]ₘA- steht;
X für O, NR⁴ oder S steht, wobei R⁴ seinerseits für H oder eine Alkylgruppe mit 1 bis 10 Kohlenstoffatomen steht;
X¹ für NR⁴, CH₂ oder C₂H₄ steht und m = 0 oder 1 ist;
R² für einen Rest einer Dicarbonsäure nach Entfernung der zwei Carboxylgruppen, insbesondere für eine gesättigte oder ungesättigte, gegebenenfalls substituierte Alkylengruppe mit 1 bis 6 Kohlenstoffatomen oder eine, gegebenenfalls substituierte, Phenylengruppe, steht;
A für einen, gegebenenfalls substituierten, Arylenrest steht;
Y⁰ für einen (v+1)-wertigen Rest eines Polyisocyanates nach Entfernung der Isocyanatgruppen steht;
Y¹ für H oder für eine Methylgruppe steht;
Z¹ für eine funktionelle Gruppe, welche verschieden von NCO ist und welche nicht reaktiv mit Isocyanatgruppen ist, steht;
L¹ für einen (k+1)-wertigen organischen Rest steht, welcher die funktionelle Gruppe Z¹ mit dem Rest des Moleküls der Formel (I) verbindet;
k für 1 oder 2 oder 3 steht;
v für 1 oder 2 oder 3 steht und
n für 2 oder 3 oder 4 steht.

2. Hybrid-funktionelles Polymer der Formel (II): 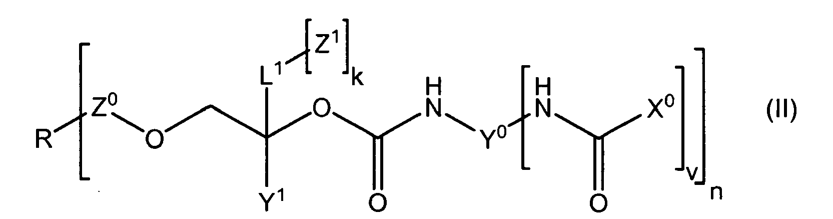 wobei R für einen n-wertigen polymeren Rest steht;
Z⁰ für -CO- oder -X-CO-R²-CO- oder -X-CO-[X¹]ₘA- steht;
X für O, NR⁴ oder S steht, wobei R⁴ seinerseits für H oder eine Alkylgruppe mit 1 bis 10 Kohlenstoffatomen steht;
X¹ für NR⁴, CH₂ oder C₂H₄ steht und m = 0 oder 1 ist;
R² für einen Rest einer Dicarbonsäure nach Entfernung der zwei Carboxylgruppen, insbesondere für eine gesättigte oder ungesättigte, gegebenenfalls substituierte Alkylengruppe mit 1 bis 6 Kohlenstoffatomen oder eine, gegebenenfalls substituierte, Phenylengruppe, steht;
A für einen, gegebenenfalls substituierten, Arylenrest steht;
Y⁰ für einen (v+1)-wertigen Rest eines Polyisocyanates nach Entfernung der Isocyanatgruppen steht;
Y¹ für H oder für eine Methylgruppe steht;
Z¹ für eine funktionelle Gruppe, welche verschieden von NCO ist und welche nicht reaktiv mit Isocyanatgruppen ist, steht;
L¹ für einen (k+1)-wertigen organischen Rest steht, welcher die funktionelle Gruppe Z¹ mit dem Rest des Moleküls der Formel (II) verbindet;
X⁰ für eine von Z¹ verschiedene Blockierungsgruppe, welche sich bei einer Temperatur von über 100°C abspaltet, oder für einen Rest der Formel (II') steht 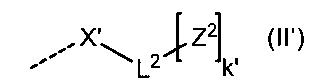
wobei Z² für eine funktionelle Gruppe, welche verschieden von Z¹ und von NCO ist und welche mit Isocyanatgruppen nicht oder weniger reaktiv als die Gruppe HX' ist, steht;
L² für einen (k'+1)-wertigen organischen Rest steht, welcher die funktionelle Gruppe Z² mit dem Rest des Moleküls der Formel (II) verbindet,
X' für O, NH, NR³ oder S ist,
wobei R³ für einen Alkylrest steht, der verzweigt oder unverzweigt und/oder gesättigt oder ungesättigt ist, oder für einen Aryl- oder Alkarylrest steht, der gegebenenfalls substituiert ist, oder für einen Rest der Formel -L²-[Z²]_{k'} steht;
k' für 1 oder 2 oder 3 steht;
k für 1 oder 2 oder 3 steht;
v für 1 oder 2 oder 3 steht und
n für 2 oder 3 oder 4 steht.

3. Hybrid-funktionelles Polymer gemäss Anspruch 1 oder 2, **dadurch gekennzeichnet, dass** Z⁰ für -CO- steht und R für ein Carboxylgruppen-terminiertes Butadien-Acrylonitril-Copolymer (CTBN) nach Entfernung der terminalen Carboxylgruppen steht.

4. Hybrid-funktionelles Polymer gemäss Anspruch 1 oder 2, **dadurch gekennzeichnet, dass** Z⁰ für -X-CO-R²-CO- steht und R für einen n-wertigen Rest eines Polymeren R¹-[XH]ₙ nach Entfernung von n Gruppen XH steht.

5. Hybrid-funktionelles Polymer gemäss Anspruch 4, **dadurch gekennzeichnet, dass** R¹ für ein Poly(oxyalkylen)polyol, Polyesterpolyol, Poly(oxyalkylen)polyamin, Polyalkylenpolyol, Polycarbonatpolyol, Polymercaptan, Polyhydroxypolyurethan oder Hydroxylterminiertes Polysiloxan nach Entfernung der Hydroxyl-, Amin-, oder Mercaptangruppen steht.

6. Hybrid-funktionelles Polymer gemäss Anspruch 1 oder 2, **dadurch gekennzeichnet, dass** Z⁰ für -X-CO-[X¹]ₘA- und A für eine Phenylengruppe steht.

7. Hybrid-funktionelles Polymer gemäss einem der vorhergehenden Ansprüche, **dadurch gekennzeichnet, dass** Z¹ ausgewählt ist aus der Gruppe bestehend aus (Meth)acrylat, Silan, Vinyl, Allyl, Nitril und Epoxid.

8. Hybrid-funktionelles Polymer gemäss einem der vorhergehenden Ansprüche, **dadurch gekennzeichnet, dass** L¹ für eine Methylengruppe steht.

9. Hybrid-funktionelles Polymer gemäss einem der vorhergehenden Ansprüche, **dadurch gekennzeichnet, dass** Y⁰ für ein Polyisocyanat nach Entfernung der Isocyanatgruppen steht, wobei das Polyisocyanat ausgewählt ist aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Biurete dieser genannten Polyisocyanate, Uretdione dieser genannten Polyisocyanate und Isocyanurate dieser genannten Polyisocyanate.

10. Hybrid-funktionelles Polymer gemäss einem der Ansprüche 2 bis 9, **dadurch gekennzeichnet, dass** Z² ausgewählt ist aus der Gruppe bestehend aus Isocyanat, Epoxid, Glycidyl, Amin, (Meth)acrylat, Silan, Vinyl, Allyl und Nitril.

11. Hybrid-funktionelles Polymer gemäss einem der Ansprüche 2 bis 9, **dadurch gekennzeichnet, dass** X⁰ für einen Rest steht, welcher ausgewählt ist aus der Gruppe bestehend aus 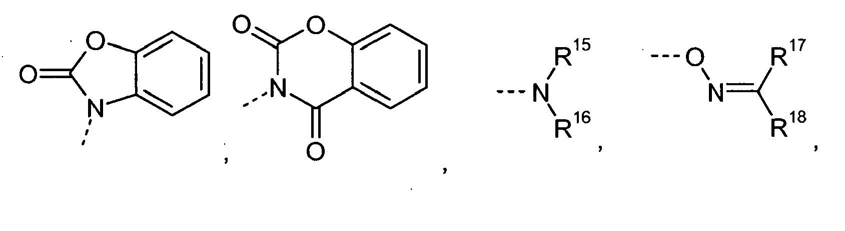 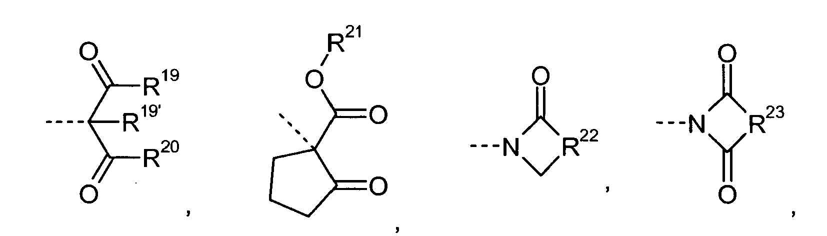 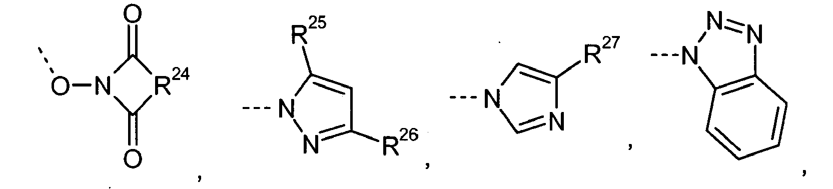 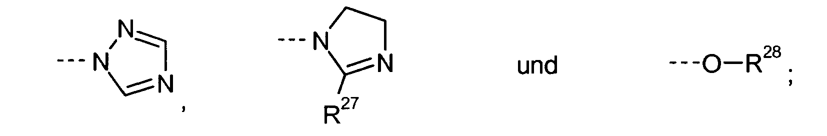 wobei
R¹⁵, R¹⁶, R¹⁷ und R¹⁸ je unabhängig voneinander für eine Alkyl- oder Cycloalkyl- oder Aryl- oder Aralkyl- oder Arylalkyl-Gruppe steht
oder R¹⁵ zusammen mit R¹⁶, oder R¹⁷ zusammen mit R¹⁸, einen Teil eines 4- bis 7- gliedrigen Rings bilden, welcher allenfalls substituiert ist;
R¹⁹, R^{19'} und R²⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
R²¹ für eine Alkylgruppe steht,
R²², R²³ und R²⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R²⁵, R²⁶ und R²⁷ je unabhängig voneinander für H oder für eine Alkylgruppe oder für eine Arylgruppe oder eine Aralkylgruppe stehen; und
R²⁸ für eine Aralkylgruppe oder für eine ein- oder mehrkernige substituierte oder unsubstituierte Aromatengruppe steht, welche gegebenenfalls aromatische Hydroxylgruppen aufweist.

12. Verfahren zur Herstellung eines Hybrid-funktionellen Polymers der Formel (I) gemäss einem der vorhergehenden Ansprüche umfassend die Schritte:
a) Bereitstellen eines Carboxylgruppen-terminierten Polymers der Formel (IIIa) oder (IIIb) oder eines Phenolgruppen-terminierten Polymers der Formel (IV), insbesondere der Formel (IVa) und einer Epoxidverbindung der Formel (V): 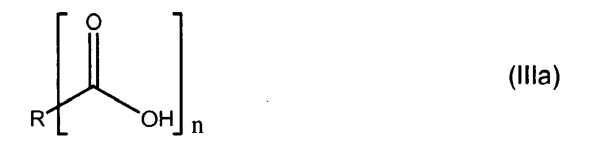 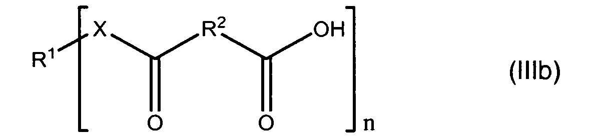 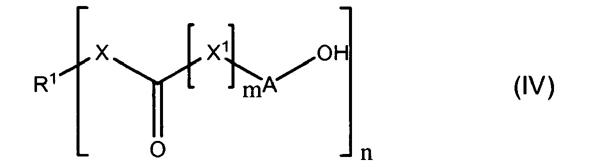 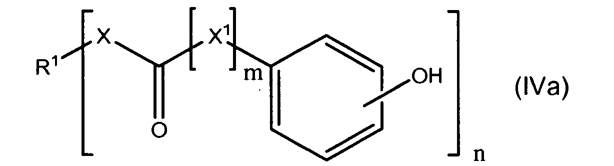 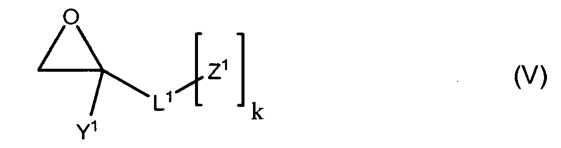
b) Reaktion der Verbindungen aus Schritt a) zu einer Hydroxyverbindung der Formel (VI): 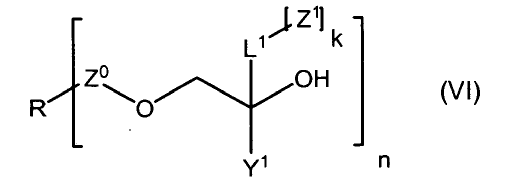
c) Zugabe eines Polyisocyanates der Formel (VII): 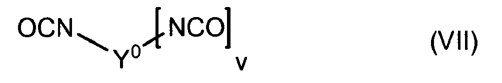
und Umsetzung zu einem Hybrid-funktionellen Polymer der Formel (I).

13. Verfahren gemäss Anspruch 12, wobei in Schritt a) die Epoxidverbindung der Formel (V) im stöchiometrischen Überschuss zugesetzt wird.

14. Verfahren gemäss Anspruch 12 oder 13, wobei die Epoxidverbindung der Formel (V) eine Glycidyletherverbindung ist.

15. Verfahren zur Herstellung eines Hybrid-funktionellen Polymers nach Formel (II) gemäss einem der Ansprüche 2 bis 11, umfassend die Schritte:
α) Bereitstellen eines Hybrid-funktionellen Polymers der Formel (I) und/oder eines Verfahrensproduktes aus einem der Ansprüche 12-14,
β) Zugabe einer Verbindung der Formel HX⁰, bzw. HX'-L²-[Z²]_{k'} , und Umsetzung zu einem Hybrid-funktionellen Polymer der Formel (11).

16. Zusammensetzung enthaltend Hybrid-funktionellen Polymers gemäss einem der Ansprüche 1 bis 11.

17. Verwendung eines Hybrid-funktionellen Polymers gemäss einem der Ansprüche 1 bis 11 für die Herstellung von Beschichtungen, Klebstoffen oder Dichtstoffen.

18. Verfahren zur Herstellung von Beschichtungen, Klebstoffen oder Dichtstoffen, wobei ein Hybrid-funktionelles Polymer gemäss einem der Ansprüche 1 bis 11 mit mindestens einer weiteren Komponente vermischt wird und eine Vernetzungsreaktion durchgeführt wird.

19. Verbundkörper erhalten aus einem Verkleben von mindestens zwei Substraten mittels einer Zusammensetzung gemäss Anspruch 16.

20. Verwendung einer Hydroxyverbindung der Formel (VI): 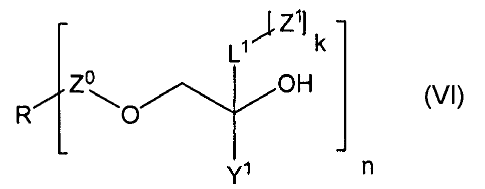 in der Polyurethan-Chemie,
wobei R für einen n-wertigen polymeren Rest steht;
Z⁰ für -CO- oder -X-CO-R²-CO- oder -X-CO-[X¹]ₘA- steht;
X für O, NR⁴ oder S steht, wobei R⁴ seinerseits für H oder eine Alkylgruppe mit 1 bis 10 Kohlenstoffatomen steht;
X¹ für NR⁴, CH₂ oder C₂H₄ steht und m = 0 oder 1 ist;
R² für einen Rest einer Dicarbonsäure nach Entfernung der zwei Carboxylgruppen, insbesondere für eine gesättigte oder ungesättigte, gegebenenfalls substituierte Alkylengruppe mit 1 bis 6 Kohlenstoffatomen oder eine, gegebenenfalls substituierte, Phenylengruppe, steht;
A für einen, gegebenenfalls substituierten, Arylenrest steht;
Y¹ für H oder für eine Methylgruppe steht;
Z¹ für eine funktionelle Gruppe, welche verschieden von NCO ist und welche nicht reaktiv mit Isocyanatgruppen ist, steht;
L¹ für einen (k+1)-wertigen organischen Rest steht, welcher die funktionelle Gruppe Z¹ mit dem Rest des Moleküls der Formel (I) verbindet;
k für 1 oder 2 oder 3 steht; und
n für 2 oder 3 oder 4 steht.

## Claims

1. Hybrid-functional polymer of the formula (I): 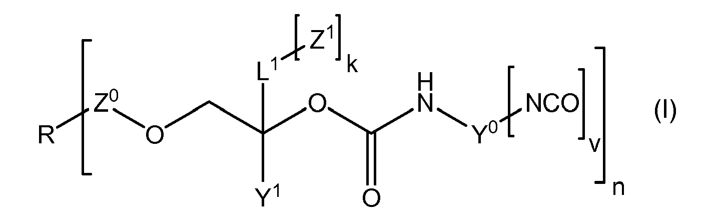 where R is an n-valent polymeric radical;
Z⁰ is -CO- or -X-CO-R²-CO- or -X-CO-[X¹]ₘA-;
X is O, NR⁴ or S, R⁴ in turn being H or an alkyl group having 1 to 10 carbon atoms;
X¹ is NR⁴, CH₂ or C₂H₄ and m is 0 or 1;
R² is a radical of a dicarboxylic acid following removal of the two carboxyl groups, in particular a saturated or unsaturated, optionally substituted alkylene group having 1 to 6 carbon atoms, or an optionally substituted phenylene group;
A is an optionally substituted arylene radical;
Y⁰ is a (v+1)-valent radical of a polyisocyanate following removal of the isocyanate groups;
Y¹ is H or a methyl group;
Z¹ is a functional group which is different from NCO and which is not reactive with isocyanate groups;
L¹ is a (k+1)-valent organic radical which connects the functional group Z¹ to the remainder of the molecule of the formula (I);
k is 1 or 2 or 3;
v is 1 or 2 or 3; and
n is 2 or 3 or 4.

2. Hybrid-functional polymer of the formula (II): 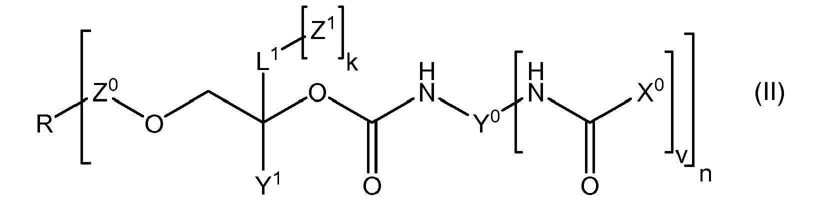 where R is an n-valent polymeric radical;
Z⁰ is -CO- or -X-CO-R²-CO- or -X-CO-[X¹]ₘA-;
X is O, NR⁴ or S, R⁴ in turn being H or an alkyl group having 1 to 10 carbon atoms;
X¹ is NR⁴, CH₂ or C₂H₄ and m is 0 or 1;
R² is a radical of a dicarboxylic acid following removal of the two carboxyl groups, in particular a saturated or unsaturated, optionally substituted alkylene group having 1 to 6 carbon atoms, or an optionally substituted phenylene group;
A is an optionally substituted arylene radical;
Y⁰ is a (v+1)-valent radical of a polyisocyanate following removal of the isocyanate groups;
Y¹ is H or a methyl group;
Z¹ is a functional group which is different from NCO and which is not reactive with isocyanate groups;
L¹ is a (k+1)-valent organic radical which connects the functional group Z¹ to the remainder of the molecule of the formula (II);
X⁰ is a blocking group which is different from Z¹ and which is eliminated at a temperature of above 100°C, or is a radical of the formula (II') 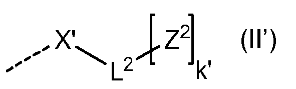
where Z² is a functional group which is different from Z¹ and from NCO and which with isocyanate groups is not reactive or is less reactive than the group HX';
L² is a (k'+1)-valent organic radical which connects the functional group Z² to the remainder of the molecule of the formula (II);
X' is O, NH, NR³ or S,
R³ being an alkyl radical which is branched or unbranched and/or saturated or unsaturated, or is an aryl or alkaryl radical, which is optionally substituted, or is a radical of the formula -L²-[Z²]_{k'};
k' is 1 or 2 or 3;
k is 1 or 2 or 3;
v is 1 or 2 or 3; and
n is 2 or 3 or 4.

3. Hybrid-functional polymer according to Claim 1 or 2, **characterized in that** Z⁰ is -CO- and R is a carboxyl-terminated butadiene-acrylonitrile copolymer (CTBN) following removal of the terminal carboxyl groups.

4. Hybrid-functional polymer according to Claim 1 or 2, **characterized in that** Z⁰ is -X-CO-R²-CO- and R is an n-valent radical of a polymer R¹-[XH]ₙ following removal of n groups XH.

5. Hybrid-functional polymer according to Claim 4, **characterized in that** R¹ is a poly(oxyalkylene) polyol, polyester polyol, poly(oxyalkylene)polyamine, polyalkylene polyol, polycarbonate polyol, polymercaptan, polyhydroxypolyurethane or hydroxyl-terminated polysiloxane following removal of the hydroxyl, amine or mercaptan groups.

6. Hybrid-functional polymer according to Claim 1 or 2, **characterized in that** Z⁰ is -X-CO-[X¹]ₘA- and A is a phenylene group.

7. Hybrid-functional polymer according to any of the preceding claims, **characterized in that** Z¹ is selected from the group consisting of (meth)acrylate, silane, vinyl, allyl, nitrile and epoxide.

8. Hybrid-functional polymer according to any of the preceding claims, **characterized in that** L¹ is a methylene group.

9. Hybrid-functional polymer according to any of the preceding claims, **characterized in that** Y⁰ is a polyisocyanate following removal of the isocyanate groups, the polyisocyanate being selected from the group consisting of 1,6-hexamethylene diisocyanate (HDI), 1-isocyanato-3,3,5-trimethyl-5-isocyanatomethylcyclohexane (isophoronediisocyanate or IPDI), 2,4- and 2,6-tolylene diisocyanate and any desired mixtures of these isomers (TDI), 4,4'-, 2,4'- and 2,2'-diphenylmethane diisocyanate and any desired mixtures of these isomers (MDI), biurets of these stated polyisocyanates, uretdiones of these stated polyisocyanates and isocyanurates of these stated polyisocyanates.

10. Hybrid-functional polymer according to any of Claims 2 to 9, **characterized in that** Z² is selected from the group consisting of isocyanate, epoxide, glycidyl, amine, (meth)acrylate, silane, vinyl, allyl and nitrile.

11. Hybrid-functional polymer according to any of Claims 2 to 9, **characterized in that** X⁰ is a radical which is selected from the group consisting of 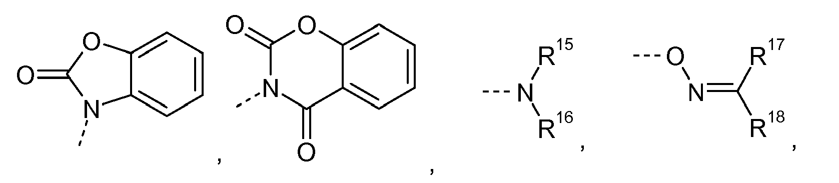 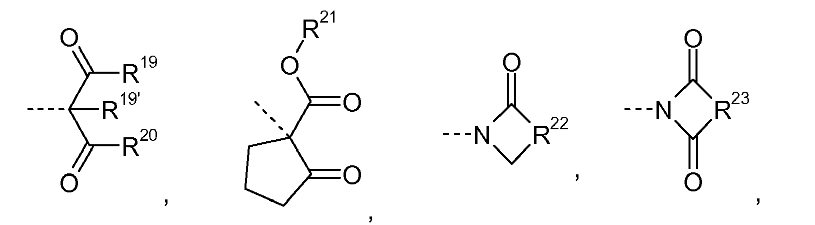 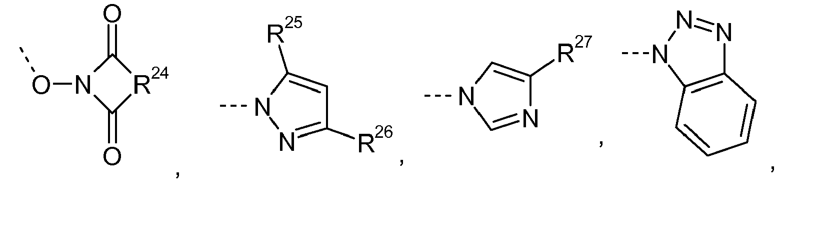 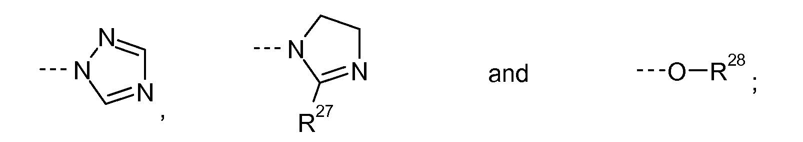 where
R¹⁵, R¹⁶, R¹⁷ and R¹⁸ independently of one another are each an alkyl or cycloalkyl or aryl or aralkyl or arylalkyl group;
or R¹⁵ together with R¹⁶, or R¹⁷ together with R¹⁸, is part of a 4- to 7-membered ring which if appropriate is substituted;
R¹⁹, R^{19'} and R²⁰ independently of one another are each an alkyl or aralkyl or aryl or arylalkyl group or an alkyloxy or aryloxy or aralkyloxy group;
R²¹ is an alkyl group;
R²², R²³ and R²⁴ independently of one another are each an alkylene group having 2 to 5 C atoms, which if desired has double bonds or is substituted, or a phenylene group or a hydrogenated phenylene group;
R²⁵, R²⁶ and R²⁷ independently of one another are each H or an alkyl group or an aryl group or an aralkyl group; and
R²⁸ is an aralkyl group or a mono- or polycyclic, substituted or unsubstituted aromatic group which if desired contains aromatic hydroxyl groups.

12. Process for preparing a hybrid-functional polymer of the formula (I) according to any of the preceding claims, comprising the steps of:
a) providing a carboxyl-terminated polymer of the formula (IIIa) or (IIIb) or a phenol-group-terminated polymer of the formula (IV), more particularly of the formula (IVa), and an epoxide compound of the formula (V): 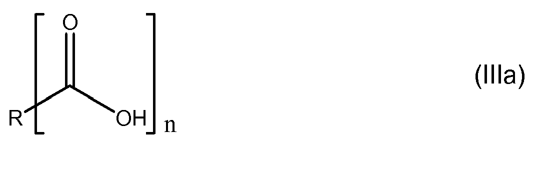 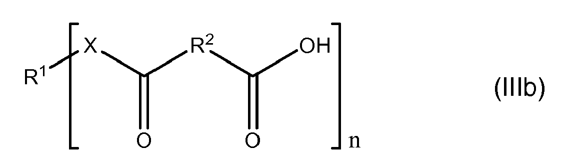 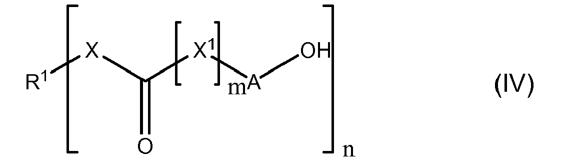 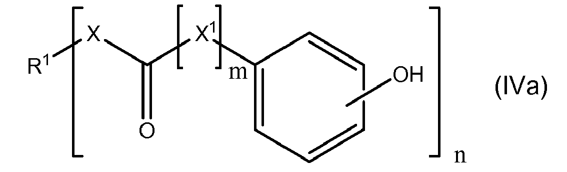 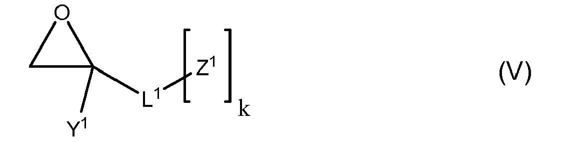
b) reacting the compounds from step a) to give a hydroxy compound of the formula (VI): 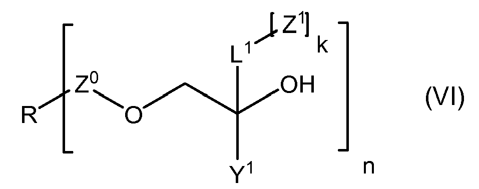
c) adding a polyisocyanate of the formula (VII): 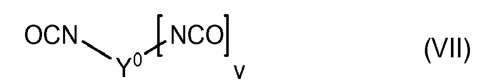
and carrying out reaction to give a hybrid-functional polymer of the formula (I).

13. Process according to Claim 12, the epoxide compound of the formula (V) being added in a stoichiometric excess in step a).

14. Process according to Claim 12 or 13, the epoxide compound of the formula (V) being a glycidyl ether compound.

15. Process for preparing a hybrid-functional polymer of formula (II) according to any of Claims 2 to 11, comprising the steps of:
α) providing a hybrid-functional polymer of the formula (I) and/or a process product from any of Claims 12-14,
β) adding a compound of the formula HX⁰, or HX'-L²-[Z²]_{k'}, and carrying out reaction to give a hybrid-functional polymer of the formula (II).

16. Composition comprising hybrid-functional polymers according to any of Claims 1 to 11.

17. Use of a hybrid-functional polymer according to any of Claims 1 to 11 for producing coatings, adhesives or sealants.

18. Process for preparing coatings, adhesives or sealants, a hybrid-functional polymer according to any of Claims 1 to 11 being mixed with at least one further component, and a crosslinking reaction being carried out.

19. Composite obtained from the adhesive bonding of at least two substrates by means of the composition according to Claim 16.

20. Use of a hydroxy compound of the formula (VI): 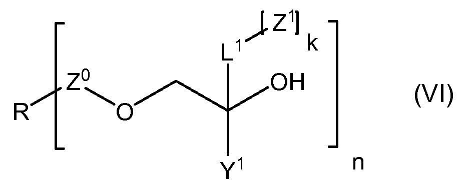 in polyurethane chemistry,
where R is an n-valent polymeric radical;
Z⁰ is -CO- or -X-CO-R²-CO- or -X-CO-[X¹]ₘA-;
X is O, NR⁴ or S, R⁴ in turn being H or an alkyl group having 1 to 10 carbon atoms;
X¹ is NR⁴, CH₂ or C₂H₄ and m is 0 or 1;
R² is a radical of a dicarboxylic acid following removal of the two carboxyl groups, in particular a saturated or unsaturated, optionally substituted alkylene group having 1 to 6 carbon atoms, or an optionally substituted phenylene group;
A is an optionally substituted arylene radical;
Y¹ is H or a methyl group;
Z¹ is a functional group which is different from NCO and which is not reactive with isocyanate groups;
L¹ is a (k+1)-valent organic radical which connects the functional group Z¹ to the remainder of the molecule of the formula (I);
k is 1 or 2 or 3;
and
n is 2 or 3 or 4.

## Revendications

1. Polymère à fonctionnalité hybride, de formule (I) 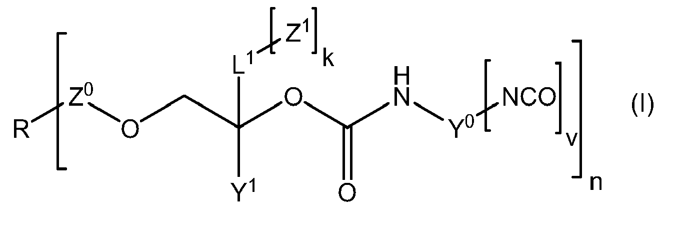 dans laquelle R représente un radical polymère n-valent ;
Z⁰ représente -CO- ou -X-CO-R²-CO- ou -X-CO-[X¹]ₘA- ;
X représente O, NR⁴ ou S, R⁴ à son tour représentant H ou un groupe alkyle ayant de 1 à 10 atomes de carbone ;
X¹ représente NR⁴, CH₂ ou C₂H₄ et m = 0 ou 1 ;
R² représente un reste d'un acide dicarboxylique après élimination des deux groupes carboxy, en particulier un groupe alkylène saturé ou insaturé, éventuellement substitué, ayant de 1 à 6 atomes de carbone ou un groupe phénylène éventuellement substitué ;
A représente un radical arylène éventuellement substitué ;
Y⁰ représente un reste (v+1)-valent d'un polyisocyanate après élimination des groupes isocyanate ;
Y¹ représente H ou un groupe méthyle ;
Z¹ représente un groupe fonctionnel qui est différent de NCO et qui n'est pas réactif avec les groupes isocyanate ;
L¹ représente un radical organique (k+1)-valent qui relie le groupe fonctionnel Z¹ au reste de la molécule de formule (I) ;
k représente 1 ou 2 ou 3 ;
v représente 1 ou 2 ou 3 et
n représente 2 ou 3 ou 4.

2. Polymère à fonctionnalité hybride, de formule (II) 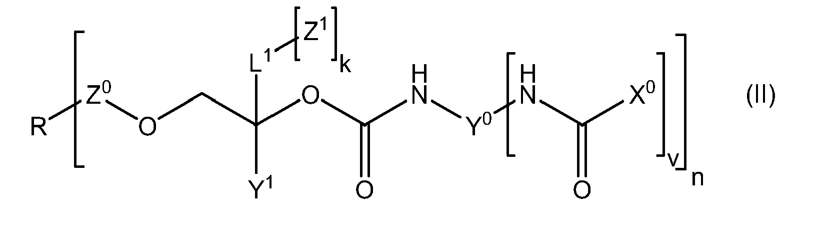 dans laquelle R représente un radical polymère n-valent ;
Z⁰ représente -CO- ou -X-CO-R²-CO- ou -X-CO-[X¹]ₘA- ;
X représente O, NR⁴ ou S, R⁴ à son tour représentant H ou un groupe alkyle ayant de 1 à 10 atomes de carbone ;
X¹ représente NR⁴, CH₂ ou C₂H₄ et m = 0 ou 1 ;
R² représente un reste d'un acide dicarboxylique après élimination des deux groupes carboxy, en particulier un groupe alkylène saturé ou insaturé, éventuellement substitué, ayant de 1 à 6 atomes de carbone ou un groupe phénylène éventuellement substitué ;
A représente un radical arylène éventuellement substitué ;
Y⁰ représente un reste (v+1)-valent d'un polyisocyanate après élimination des groupes isocyanate ;
Y¹ représente H ou un groupe méthylène ;
Z¹ représente un groupe fonctionnel qui est différent de NCO et qui n'est pas réactif avec les groupes isocyanate ;
L¹ représente un radical organique (k+1)-valent qui relie le groupe fonctionnel Z¹ au reste de la molécule de formule (II) ;
X⁰ représente un groupe de blocage différent de Z¹, qui se sépare à une température de plus de 100 °C, ou un radical de formule (II') 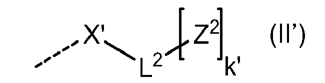
Z² représentant un groupe fonctionnel qui est différent de Z¹ et de NCO et qui n'est pas réactif avec les groupes isocyanate ou est moins réactif avec les groupes isocyanate que le groupe HX' ;
L² représente un radical organique (k'+1)-valent qui relie le groupe fonctionnel Z² au reste de la molécule de formule (II) ;
X' représente O, NH, NR³ ou S,
R³ représentant un radical alkyle qui est saturé ou insaturé et/ou ramifié ou non ramifié, ou un radical aryle ou alkaryle qui est éventuellement substitué, ou un radical de formule -L²-[Z²]_{k'} ;
k' représente 1 ou 2 ou 3 ;
k représente 1 ou 2 ou 3 ;
v représente 1 ou 2 ou 3 et
n représente 2 ou 3 ou 4.

3. Polymère à fonctionnalité hybride selon la revendication 1 ou 2, **caractérisé en ce que** Z⁰ représente -CO- et R représente un copolymère butadiène-acrylonitrile terminé par des groupes carboxy (CTBN), après élimination des groupes carboxy terminaux.

4. Polymère à fonctionnalité hybride selon la revendication 1 ou 2, **caractérisé en ce que** Z⁰ représente -X-CO-R²-CO- et R représente un reste n-valent d'un polymère R¹-[XH]ₙ après élimination de n groupes XH.

5. Polymère à fonctionnalité hybride selon la revendication 4, **caractérisé en ce que** R¹ représente un poly(oxyalkylène)polyol, un polyesterpolyol, une poly(oxyalkylène)polyamine, un polyalkylènepolyol, un polycarbonatepolyol, un polymercaptan, un polyhydroxy-polyuréthanne ou un polysiloxane à terminaison hydroxy, après élimination des groupes hydroxy, amino ou mercaptan.

6. Polymère à fonctionnalité hybride selon la revendication 1 ou 2, **caractérisé en ce que** Z⁰ représente -X-CO-[X¹]ₘA- et A représente un groupe phénylène.

7. Polymère à fonctionnalité hybride selon l'une quelconque des revendications précédentes, **caractérisé en ce que** Z¹ est choisi dans l'ensemble constitué par les groupes (méth)acrylate, silane, vinyle, allyle, nitrilo et époxy.

8. Polymère à fonctionnalité hybride selon l'une quelconque des revendications précédentes, **caractérisé en ce que** L¹ représente un groupe méthylène.

9. Polymère à fonctionnalité hybride selon l'une quelconque des revendications précédentes, **caractérisé en ce que** Y⁰ représente un polyisocyanate après élimination des groupes isocyanate, le polyisocyanate étant choisi dans l'ensemble constitué par le 1,6-hexaméthylènediisocyanate (HDI), le 1-isocyanato-3,3,5-triméthyl-5-isocyanatométhyl-cyclohexane (= isophorone-diisocyanate ou IPDI), le 2,4- et le 2,6-tolulène-diisocyanate et des mélanges quelconques de ces isomères (TDI), le 4,4'-, le 2,4'- et le 2,2'-diphénylméthane-diisocyanate et des mélanges quelconques de ces isomères (MDI), les biurets de ces polyisocyanates mentionnés, les uretdiones de ces polyisocyanates mentionnés et les isocyanurates de ces polyisocyanates mentionnés.

10. Polymère à fonctionnalité hybride selon l'une quelconque des revendications 2 à 9, **caractérisé en ce que** Z² est choisi dans l'ensemble constitué par les groupes isocyanate, époxy, glycidyle, amino, (méth)acrylate, silane, vinyle, allyle et nitrilo.

11. Polymère à fonctionnalité hybride selon l'une quelconque des revendications 2 à 9, **caractérisé en ce que** X⁰ représente un radical qui est chois dans l'ensemble constitué par 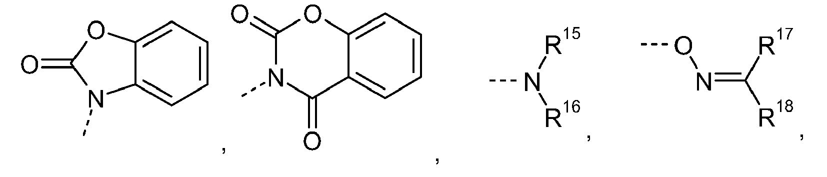 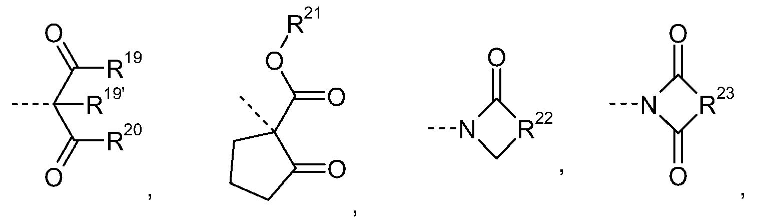 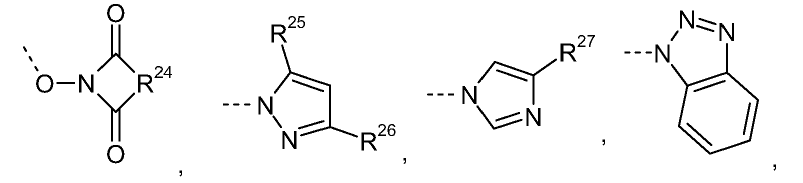 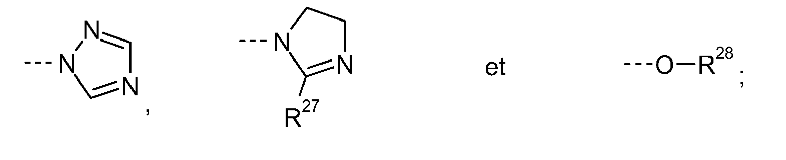 où
R¹⁵, R¹⁶, R¹⁷ et R¹⁸ représentent chacun, indépendamment les uns des autres, un groupe alkyle ou cycloalkyle ou aryle ou aralkyle ou arylalkyle,
ou R¹⁵ forme conjointement avec R¹⁶, ou R¹⁷ forme conjointement avec R¹⁸, une partie d'un cycle à 4-7 chaînons, qui est éventuellement substitué ;
R¹⁹, R^{19'} ou R²⁰ représentent chacun indépendamment un groupe alkyle ou aralkyle ou aryle ou arylalkyle ou un groupe alkyloxy ou aryloxy ou aralkyloxy ;
R²¹ représente un groupe alkyle,
R²², R²³ et R²⁴ représentent chacun indépendamment un groupe alkylène ayant de 2 à 5 atomes de carbone, qui éventuellement comporte des doubles liaisons ou est substitué, ou un groupe phénylène ou un groupe phénylène hydrogéné ;
R²⁵, R²⁶ et R²⁷ représentent chacun indépendamment H ou un groupe alkyle ou un groupe aryle ou un groupe aralkyle, et
R²⁸ représente un groupe aralkyle ou un groupe aromatique mono- ou polynucléaire, substitué ou non substitué, qui éventuellement comporte des groupes hydroxy aromatiques.

12. Procédé pour la préparation d'un polymère à fonctionnalité hybride de formule (I) selon l'une quelconque des revendications précédentes, comprenant les étapes :
a) fourniture d'un polymère terminé par des groupes carboxy, de formule (IIIa) ou (IIIb) ou d'un polymère terminé pat des groupes phénoliques, de formule (IV), en particulier de formule (IVa), et d'un époxyde de formule (V) : 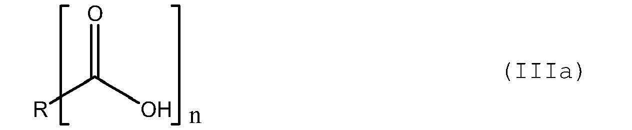 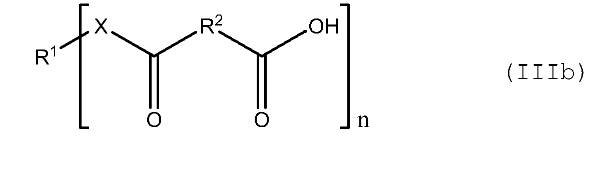 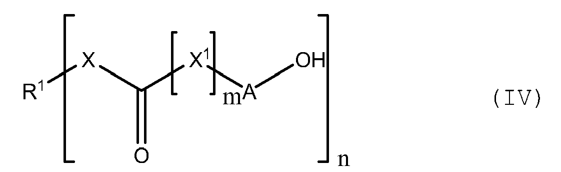 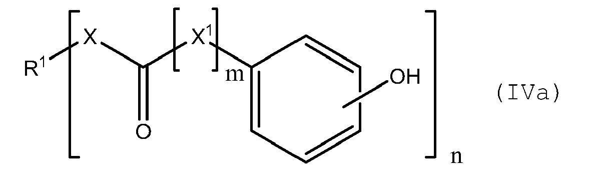 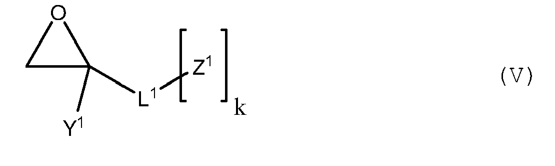
b) réaction des composés de l'étape a), conduisant à un composé hydroxylé de formule (VI) : 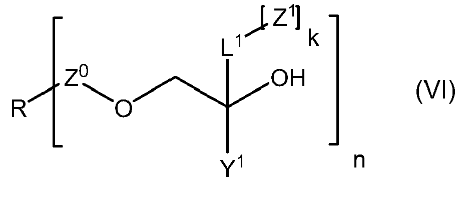
c) addition d'un polyisocyanate de formule (VII) : 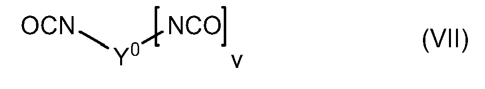
et réaction conduisant à un polymère à fonctionnalité hybride de formule (I).

13. Procédé selon la revendication 12, dans lequel, dans l'étape a) on ajoute l'époxyde (V) en un excès stoechiométrique.

14. Procédé selon la revendication 12 ou 13, dans lequel l'époxyde de formule (V) est un composé glycidyléther.

15. Procédé pour la préparation d'un polymère à fonctionnalité hybride de formule (II), selon l'une quelconque des revendications 2 à 11, comprenant les étapes :
α) fourniture d'un polymère à fonctionnalité hybride de formule (I) et/ou d'un précurseur pour le procédé, de l'une quelconque des revendications 12 à 14,
β) addition d'un composé de formule HX⁰ ou HX'-L²-[Z²]_{k'}, et réaction conduisant à un polymère à fonctionnalité hybride de formule (II).

16. Composition contenant un polymère à fonctionnalité hybride selon l'une quelconque des revendications 1 à 11.

17. Utilisation d'un polymère à fonctionnalité hybride selon l'une quelconque des revendications 1 à 11, pour la production de revêtements, d'adhésifs ou de matériaux d'étanchéité.

18. Procédé pour la production de revêtements, d'adhésifs ou de matériaux d'étanchéité, dans lequel on mélange un polymère à fonctionnalité hybride selon l'une quelconque des revendications 1 à 11 avec au moins un autre composant et on effectue une réaction de réticulation.

19. Corps composites obtenus par un collage d'au moins deux substrats au moyen d'une composition selon la revendication 16.

20. Utilisation d'un composé hydroxylé de formule (VI) dans la chimie des polyuréthannes: 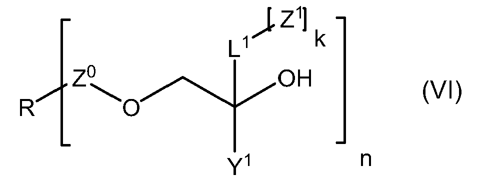 dans laquelle R représente un radical polymère n-valent ;
Z⁰ représente -CO- ou -X-CO-R²-CO- ou -X-CO-[X¹]ₘA- ;
X représente O, NR⁴ ou S, R⁴ à son tour représentant H ou un groupe alkyle ayant de 1 à 10 atomes de carbone ;
X¹ représente NR⁴, CH₂ ou C₂H₄ et m = 0 ou 1 ;
R² représente un reste d'un acide dicarboxylique après élimination des deux groupes carboxy, en particulier un groupe alkylène saturé ou insaturé, éventuellement substitué, ayant de 1 à 6 atomes de carbone ou un groupe phénylène éventuellement substitué ;
A représente un radical arylène éventuellement substitué ;
Y¹ représente H ou un groupe méthyle ;
Z¹ représente un groupe fonctionnel qui est différent de NCO et qui n'est pas réactif avec les groupes isocyanate ;
L¹ représente un radical organique (k+1)-valent qui relie le groupe fonctionnel Z¹ au reste de la molécule de formule (I) ;
k représente 1 ou 2 ou 3 ;
et
n représente 2 ou 3 ou 4.
